# EUROPEAN PATENT APPLICATION

(11) **EP 4 181 475 A1**
(43) Date of publication of application: **17.05.2023**
(21) Application number: 21890639.4
(22) Date of filing: 30.06.2021
(51) Int. Cl.: H04L 41/00

(54) **METHOD, APPARATUS AND SYSTEM FOR PROCESSING FAULT**

(30) Priority: 16.11.2020 CN 202011281081
(71) Applicant: Huawei Technologies Co., Ltd., Shenzhen, Guangdong 518129 (CN)
(72) Inventor: CHEN, Xiansong, Shenzhen, Guangdong 518129 (CN)
(74) Representative: Gill Jennings & Every LLP
(86) International application number: PCT/CN2021/103583
(87) International publication number: WO 2022/100108

(57) **Abstract**

This application discloses a fault processing method, apparatus, and system, and relates to the communications field. The method includes: receiving fault information, where the fault information includes a type information set, a first relationship set, root alarm information of a fault, processing suggestion information, and time information of a plurality of anomaly events, and the first relationship set includes a relationship between the plurality of anomaly events; aggregating fault information including a same type information set, same root alarm information, and same processing suggestion information into a fault information set, obtaining, as a second relationship set, an intersection set of first relationship sets in all pieces of fault information in the fault information set, and determining a time length based on time information in all the pieces of fault information; and sending a fault processing rule, where the fault processing rule includes the second relationship set, the time length, and a type information set, root alarm information, and processing suggestion information that are in first fault information. In this application, efficiency and real-time performance in configuring the fault processing rule can be improved.

## Description

### CROSS-REFERENCE TO RELATED APPLICATIONS

This application claims priority to Chinese Patent Application No. 202011281081.9, filed on November 16, 2020 and entitled "FAULT PROCESSING METHOD, APPARATUS, AND SYSTEM", which is incorporated herein by reference in its entirety.

### TECHNICAL FIELD

This application relates to the communications field, and in particular, to a fault processing method, apparatus, and system.

### BACKGROUND

A communication network usually includes a plurality of network elements, and a fault may occur in a running process of the network element. Therefore, fault processing is an important task in a communication network operations and maintenance process.

To process the fault in the network element, an element management system (element management system, EMS) may be deployed in the communication network, and the EMS may communicate with at least one network element. A technical person may manually configure a fault processing rule for the EMS. In this way, the EMS may process, according to the fault processing rule, a fault that occurs in the at least one network element.

In a process of implementing this application, the inventor finds that the current technology has at least the following problems:

In the EMS, the fault processing rule can only be separately configured for each EMS manually based on experience, and the fault processing rule configured for each EMS is not learnable or updateable. This causes low efficiency and non-real-time performance in configuring the fault processing rule for the EMS.

### SUMMARY

This application provides a fault processing method, apparatus, and system, to improve efficiency and real-time performance in configuring a fault processing rule. The technical solutions are as follows.

According to a first aspect, this application provides a fault processing method. In the method, an operations support system OSS receives fault information sent by at least one element management system EMS, where the fault information includes a type information set, a first relationship set, root alarm information of a fault, processing suggestion information for the fault, and time information of a plurality of anomaly events caused by the fault, the type information set includes type information of the plurality of anomaly events, and the first relationship set includes a relationship between the plurality of anomaly events. The OSS aggregates fault information including a same type information set, same root alarm information, and same processing suggestion information into a fault information set, obtains, as a second relationship set, an intersection set of first relationship sets in all pieces of fault information in the fault information set, and determines a time length based on time information in all the pieces of fault information, where the time length is duration of the anomaly event caused by the fault. The OSS sends a fault processing rule to the at least one EMS, where the fault processing rule includes the second relationship set, the time length, and a type information set, root alarm information, and processing suggestion information that are in first fault information, the first fault information is any piece of fault information in the fault information set, and the fault processing rule indicates the at least one EMS to process the fault.

Because the fault information sent by the EMS includes the first relationship set and the time information of the plurality of anomaly events, the OSS may obtain, as the second relationship set, the intersection set of the first relationship sets included in all the pieces of fault information in the fault information set, and determine the time length based on the time information included in all the pieces of fault information in the fault information set, to obtain the fault processing rule including content such as the second relationship set and the time length. Because the OSS may receive fault information sent by different EMSs, and generate a fault processing rule based on the fault information of the EMSs, data required for generating the fault processing rule is enriched, so that the generated fault processing rule is learnable and updateable, and efficiency of generating the fault processing rule is improved. The OSS sends the fault processing rule to the at least one EMS, so that efficiency and real-time performance of configuring the fault processing rule in the EMS are improved.

In a possible implementation, the relationship between the plurality of anomaly events is represented by at least one piece of type relational data, each piece of type relational data includes type information of two anomaly events of the plurality of anomaly events and a relationship between the type information of the two anomaly events, and the relationship exists between objects corresponding to the two anomaly events. Because the relationship between the anomaly events in the first relationship set is represented by the type relational data, the OSS may directly obtain the intersection set of the first relationship sets included in all the pieces of fault information in the fault information set, to improve efficiency of generating the fault processing rule.

In another possible implementation, the fault information further includes object information of an object corresponding to each of the plurality of anomaly events, the relationship between the plurality of anomaly events is represented by at least one piece of object relational data, each piece of object relational data includes object information of two objects that have a relationship and the relationship, and objects corresponding to the anomaly events include the two objects. The OSS obtains, based on the at least one piece of object relational data and the object information and type information that are of each anomaly event, a type relational data set corresponding to the fault information, where the type relational data set includes at least one piece of type relational data, each piece of type relational data includes type information of two anomaly events of the plurality of anomaly events and a relationship between the type information of the two anomaly events, and the relationship exists between objects corresponding to the two anomaly events The OSS obtains, as the second relationship set, an intersection set of type relational data sets corresponding to all the pieces of fault information in the fault information set.

Because the relationship between the anomaly events in the first relationship set is represented by the at least one piece of object relational data, and the fault information further includes the object information of each anomaly event, the OSS may not only generate the fault processing rule by using the at least one piece of object relational data and the object information and the type information that are of each anomaly event, but also implement another application based on the at least one piece of object relational data and the object information of each anomaly event. For example, the OSS may generate an object topology based on the at least one piece of object relational data, or determine, based on the at least one piece of object relational data and the object information of each anomaly event, an object that needs to be repaired.

In another possible implementation, the time information of the plurality of anomaly events is a time span of generation time of the plurality of anomaly events. The OSS selects a maximum time span from time spans in all the pieces of fault information as the time length. Because the time information in the fault information is a time span, a data amount of the fault information may be reduced. In addition, the OSS selects the maximum time span as the time length, so that the time length can cover time lengths of all the anomaly events caused by the fault.

In another possible implementation, the time information of the plurality of anomaly events is generation time of each of the plurality of anomaly events. The OSS obtains, based on the time information included in each of the pieces of fault information, a time span of generation time of anomaly events corresponding to each piece of fault information. The OSS selects a maximum time span from obtained time spans as the time length. Because the fault information includes the generation time of each anomaly event, the OSS not only can obtain the time length in the fault processing rule but also can implement other applications based on the generation time of the anomaly event in each piece of fault information. For example, the generation time of the anomaly event in the fault information may be displayed, for an operations and maintenance personnel to view, or a process of locating a root by the EMS and/or an object that needs to be repaired are/is determined based on the generation time of the anomaly event in the fault information.

In another possible implementation, types of the plurality of anomaly events include an alarm type, a performance threshold-crossing type, and/or a network element anomaly log type.

In another possible implementation, the OSS generates an object topology based on the at least one piece of object relational data, and displays the object topology, for an operations and maintenance personnel to view.

According to a second aspect, this application provides a fault processing method. In the method, an element management system EMS obtains information that is about a plurality of first anomaly events caused by a first fault and that is reported by at least one network element managed by the EMS, and obtains root alarm information and processing suggestion information that are of the first fault, where the information about the first anomaly event includes type information of the first anomaly event, generation time of the first anomaly event, and object information of an object corresponding to the first anomaly event. The EMS obtains a first relationship set based on object information of each first anomaly event, where the first relationship set includes a relationship between the plurality of first anomaly events. The EMS sends first fault information to an operations support system OSS, where the first fault information includes a type information set, first time information, the first relationship set, the root alarm information, and the processing suggestion information, the type information set includes type information of each first anomaly event, the first time information includes generation time of the plurality of first anomaly events or a time span of the generation time of the plurality of first anomaly events, the first fault information is used by the OSS to generate a first fault processing rule, and the first fault processing rule indicates at least one EMS that receives the first fault processing rule to process the first fault, where
the first fault processing rule includes a second relationship set, a first time length, and a type information set, root alarm information, and processing suggestion information that are of any piece of first fault information in a fault information set, the first fault information set includes a plurality of pieces of first fault information received by the OSS, each of the plurality of pieces of first fault information includes a same type information set, same root alarm information, and same processing suggestion information, the second relationship set is an intersection set of first relationship sets of the plurality of pieces of first fault information received by the OSS, the first time length is obtained by the OSS based on first time information in the plurality of pieces of first fault information, and the first time length is duration of the first anomaly event caused by the first fault.

Because the fault information sent by the EMS to the OSS includes the first relationship set and the time information of the plurality of anomaly events, the OSS may obtain, as the second relationship set, the intersection set of the first relationship sets included in all the pieces of first fault information in the first fault information set, and determine the first time length based on the time information included in all the pieces of first fault information in the first fault information set, to obtain the fault processing rule including content such as the second relationship set and the first time length. Because the OSS may receive first fault information sent by different EMSs, and generate a fault processing rule based on the first fault information of the EMSs, data required for generating the fault processing rule is enriched, so that the generated fault processing rule is learnable and updateable, and efficiency of generating the fault processing rule is improved. The OSS sends the fault processing rule to the EMS, so that efficiency and real-time performance of configuring the fault processing rule in the EMS are improved.

In a possible implementation, the relationship between the plurality of first anomaly events is represented by at least one piece of type relational data, each piece of type relational data includes type information of two first anomaly events of the plurality of first anomaly events and a relationship between the type information of the two first anomaly events, the relationship exists between objects corresponding to the two first anomaly events, and the EMS includes a network topology. The EMS obtains the first relationship set based on the network topology and/or the object information and the type information that are of each first anomaly event. Because the relationship between the anomaly events in the first relationship set obtained by the EMS is represented by the type relational data, the OSS obtains the intersection set of the first relationship sets included in all the pieces of fault information in the first fault information set, to improve efficiency of generating the fault processing rule.

In another possible implementation, the relationship between the plurality of first anomaly events is represented by at least one piece of object relational data, each piece of object relational data includes object information of two objects that have a relationship and the relationship, objects corresponding to the plurality of first anomaly events include the two objects, and the EMS includes a network topology. The EMS obtains the first relationship set based on the network topology and/or the object information of each first anomaly event. The first relationship set obtained by the EMS includes the at least one piece of object relational data. In this way, the OSS not only can generate the fault processing rule by using the first relationship set, but also can implement another application based on the first relationship set. For example, the OSS may generate an object topology based on the first relationship set, or determine, based on the first relationship set, an object that needs to be repaired.

In another possible implementation, the first fault information further includes the object information of each first anomaly event. In this way, the OSS may generate the fault processing rule by using the first relationship set and the object information and the type information that are of each anomaly event.

In another possible implementation, types of the plurality of first anomaly events include an alarm type, a performance threshold-crossing type, and/or a network element anomaly log type.

In another possible implementation, the EMS receives the first fault processing rule, and obtains, according to the first fault processing rule, information that is about a plurality of second anomaly events caused by a second fault and that is reported by the at least one network element, where the first fault and the second fault are faults of a same type, and the information about the second anomaly event includes type information of the second anomaly event, generation time of the second anomaly event, and object information of an object corresponding to the second anomaly event. The EMS obtains a third relationship set based on object information of each second anomaly event, where the third relationship set includes a relationship between the plurality of second anomaly events. The EMS sends second fault information to the OSS, where the second fault information includes second time information, a third relationship set, the type information set, the root alarm information, and the processing suggestion information, and the second time information includes generation time of the plurality of second anomaly events or a time span of the generation time of the plurality of second anomaly events.

The OSS may be configured to generate a second fault processing rule based on the second fault information, where the second fault processing rule includes a fourth relationship set, a second time length, the type information set, the root alarm information, and the processing suggestion information, the fourth relationship set is an intersection set of third relationship sets in a plurality of pieces of second fault information received by the OSS, the plurality of pieces of second fault information all include the type information set, the root alarm information, and the processing suggestion information, the second time length is obtained by the OSS based on second time information in the plurality of pieces of second fault information, and the second time length is duration of the second anomaly event caused by the second fault. The EMS receives the second fault processing rule, and updates the first fault processing rule to the second fault processing rule. In this way, the OSS may generate a fault processing rule based on second fault information of different EMSs, and send the fault processing rule to the EMS, so that the EMS can update the fault processing rule in a timely manner, so that real-time performance of the fault processing rule is implemented, and update efficiency is improved.

According to a third aspect, this application provides a fault processing apparatus, configured to perform the method performed by an OSS in any one of the first aspect or the possible implementations of the first aspect. Specifically, the apparatus includes units configured to perform the method performed by the OSS in any one of the first aspect or the possible implementations of the first aspect.

According to a fourth aspect, this application provides a fault processing apparatus, configured to perform the method performed by an EMS in any one of the second aspect or the possible implementations of the second aspect. Specifically, the apparatus includes units configured to perform the method performed by the EMS in any one of the second aspect or the possible implementations of the second aspect.

According to a fifth aspect, this application provides a fault processing apparatus. The apparatus includes a transceiver, a processor, and a memory. The transceiver, the processor, and the memory may be connected through an internal connection. The memory is configured to store a program, and the processor is configured to execute the program in the memory and cooperate with the transceiver, so that the apparatus completes the method performed by the OSS in any one of the first aspect or the possible implementations of the first aspect.

According to a sixth aspect, this application provides a fault processing apparatus. The apparatus includes a transceiver, a processor, and a memory. The transceiver, the processor, and the memory may be connected through an internal connection. The memory is configured to store a program, and the processor is configured to execute the program in the memory and cooperate with the transceiver, so that the apparatus completes the method performed by the EMS in any one of the second aspect or the possible implementations of the second aspect.

According to a seventh aspect, this application provides a computer program product. The computer program product includes a computer program stored in a computer-readable storage medium, and the computer program is loaded by a device to implement instructions for the method in any one of the first aspect, the second aspect, the possible implementations of the first aspect, or the possible implementations of the second aspect.

According to an eighth aspect, this application provides a computer-readable storage medium, configured to store a computer program. The computer program is loaded by a device to execute instructions for the method in any one of the first aspect, the second aspect, the possible implementations of the first aspect, or the possible implementations of the second aspect.

According to a ninth aspect, this application provides a fault processing system. The system includes the apparatus according to the third aspect and the apparatus according to the fourth aspect, or the system includes the apparatus according to the fifth aspect and the apparatus according to the sixth aspect.

### BRIEF DESCRIPTION OF DRAWINGS

FIG. 1 is a schematic diagram of a network architecture according to an embodiment of this application;
FIG. 2A and FIG. 2B are a flowchart of a fault processing method according to an embodiment of this application;
FIG. 3 is a flowchart of another fault processing method according to an embodiment of this application;
FIG. 4 is a schematic diagram of a structure of a fault processing apparatus according to an embodiment of this application;
FIG. 5 is a schematic diagram of a structure of another fault processing apparatus according to an embodiment of this application;
FIG. 6 is a schematic diagram of a structure of another fault processing apparatus according to an embodiment of this application;
FIG. 7 is a schematic diagram of a structure of another fault processing apparatus according to an embodiment of this application; and
FIG. 8 is a schematic diagram of a structure of a fault processing system according to an embodiment of this application.

### DESCRIPTION OF EMBODIMENTS

The following further describes in detail implementations of this application with reference to accompanying drawings.

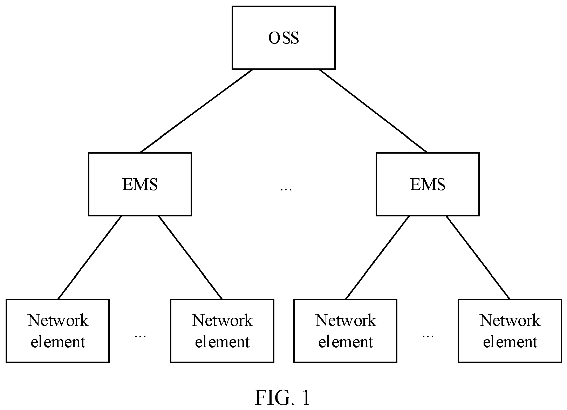

Refer to FIG. 1. An embodiment of this application provides a network architecture, including:
an operations support system (operations support system, OSS), a plurality of EMSs, and a plurality of network elements, where each EMS communicates with an OSS, and each EMS communicates with one or more network elements.

The OSS is configured to: generate at least one fault processing rule, and send the at least one fault processing rule to the EMS communicating with the OSS.

Each of the at least one fault processing rule is used for processing a fault generated by the network element, and the fault processed according to the fault processing rule may be different.

Any fault processing rule used for processing a fault includes a type information set, a first type relational data set, root alarm information, processing suggestion information, and a time length.

The type information set includes a plurality of pieces of type information, and the plurality of pieces of type information is type information of a plurality of anomaly events caused by the fault. A time span of generation time of anomaly events caused by the fault is less than or equal to the time length. The first type relational data set includes at least one piece of type relational data, and each piece of type relational data includes two pieces of type information in the type information set and a relationship between the two pieces of type information. The root alarm information includes type information of a root alarm event. The root alarm event is an anomaly event directly caused by the fault. The root alarm information may be used to reflect a cause of the fault. The processing suggestion information indicates, to the EMS or the OSS, how to process the fault.

Each EMS is configured to process, according to the at least one fault processing rule, a fault that occurs in the one or more network elements communicating with the EMS, so that a faulty network element recovers.

Any network element in the plurality of network elements may generate an anomaly event when a fault occurs, and another network element associated with the network element may also generate an anomaly event due to the fault. For example, a service path between two terminals that are communicating traverses a plurality of network elements, and the plurality of network elements that the service path traverses are associated with each other. If one network element is faulty and an anomaly event is generated, other network elements may also be affected and an anomaly event may be generated.

For any faulty network element, for ease of description, the faulty network element is referred to as a first network element. When the first network element is faulty, the first network element generates and reports at least one anomaly event. The at least one anomaly event is directly or indirectly caused by a fault.

The fault of the first network element may be a fault of a component in the first network element. The anomaly event generated by the first network element includes at least one alarm event, where the at least one alarm event includes an alarm event directly caused by the fault, and may further include an alarm event indirectly caused by the fault. The alarm event directly caused by the fault is also called the root alarm event. The root alarm event can indicate a cause of the fault.

Optionally, the anomaly event generated by the first network element may further include at least one performance threshold-crossing event, at least one network element anomaly log event, and/or the like. The performance threshold-crossing event is an event that corresponds to the performance parameter and that is generated when a parameter value of a performance parameter of the first network element exceeds a parameter value threshold. That the parameter value of the performance parameter exceeds the parameter value threshold means: The parameter value of the performance parameter is greater than the parameter value threshold, or the parameter value of the performance parameter is less than the parameter value threshold.

For example, assuming that a port of the first network element is faulty, the alarm event directly generated by the first network element is a port alarm event, in other words, the port alarm event is an alarm event directly caused by a fault. Therefore, the port alarm event is a root alarm event. Because the port is faulty, a link that passes through the port may be unable to bear a service, and the first network element may further generate a link fault alarm event. The link fault alarm event is the alarm event indirectly caused by the fault.

Because the first network element cannot receive or transmit data on the faulty port, a transmission rate of the port decreases sharply. When the transmission rate of the port is lower than a rate threshold, the first network element may generate a transmission rate threshold-crossing event, where the transmission rate threshold-crossing event is a performance threshold-crossing event.

After the port is faulty, the first network element may generate a log of the fault. The log generated by the first network element may include a port anomaly log, in other words, the first network element may generate a port anomaly log event, where the port anomaly log event is a network element anomaly log event. Therefore, when the port in the first network element is faulty, the anomaly event generated by the first network element includes the port alarm event, the link fault alarm event, the transmission rate threshold-crossing event, and the port anomaly log event.

It should be noted that, after the port is faulty, the first network element may generate one log, or may generate a plurality of logs. Each log generated by the first network element may correspond to one network element anomaly log event. Therefore, the first network element may generate one or more network element anomaly log events. The foregoing lists that the first network element generates the port anomaly log event, and the first network element may not generate an anomaly log event of another network element, or the first network element may generate an anomaly log event of another network element. For example, the first network element may further generate a link anomaly log, in other words, the first network element may further generate a link anomaly log event. It should be noted that there may be one or more links passing through the port. When there are a plurality of links passing through the port, the first network element may generate one link anomaly log event, where the link anomaly log event corresponds to the plurality of links, or the first network element may generate a plurality of link anomaly log events, where each link anomaly log event corresponds to one link.

Another network element communicating with the first network element may also be affected by the fault that occurs on the first network element, and may also generate at least one anomaly event. Another network element that communicates with the first network element and that is affected by the fault that occurs on the first network element may be referred to as a second network element.

For example, the faulty port of the first network element is still used as an example. There is a link between a port of the second network element and the faulty port of the first network element. In this case, the second network element cannot receive data sent by the first network element through the link. When the second network element detects that the faulty port of the first network element is blocked, the second network element generates a remote port blocking alarm event. Because the second network element cannot receive, through the link, the data sent by the first network element, the second network element may generate a log recording the case. The log generated by the second network element may include a link anomaly log, in other words, the second network element generates a link anomaly log event.

Similar to the first network element, the second network element may generate one log, or may generate a plurality of logs. Each log generated by the second network element may correspond to one network element anomaly log event. Therefore, the second network element may generate one or more network element anomaly log events. For example, there may be a plurality of links between a port of the second network element and the faulty port of the first network element, and the second network element may generate one link anomaly log event corresponding to the plurality of links, or generate a link anomaly log event corresponding to each link.

For another example, when a fan of the first network element is faulty, the first network element generates a fan fault alarm event, where the fan fault alarm event is an anomaly event directly caused by a fan fault, and is a root alarm event. Because the fan of the first network element is faulty, an operating temperature of a board of the first network element increases. When the operating temperature of the board exceeds a temperature threshold, the first network element generates an operating temperature threshold-crossing event (where threshold-crossing means that the threshold is exceeded, which may be greater than a maximum limit or less than a minimum limit). The operating temperature threshold-crossing event is an anomaly event indirectly caused by the fan fault. The first network element may further generate a fan fault log, so that the first network element may generate a fan anomaly log event, where the fan anomaly log event is also an anomaly event indirectly caused by the fan fault.

For a port that is in the second network element and that is connected (to be specific, in a communication connection) to the board that is in the first network element, a bit error rate of receiving data by the second network element through the port becomes higher. When the bit error rate is higher than a bit error rate threshold, the second network element generates a bit error rate threshold-crossing event.

In this example, in addition to generating the bit error rate threshold-crossing event, the second network element may also generate other anomaly events, for example, an alarm event and/or a network element anomaly log event. For example, during implementation, the second network element may further generate a bit error rate anomaly log, so that the second network element generates a bit error rate anomaly log event.

After generating an anomaly event, each network element sends event information of the generated anomaly event to an EMS communicating with the network element. The event information of the anomaly event includes type information of the anomaly event, generation time of the anomaly event, and object information of an object corresponding to the anomaly event.

The type information of the anomaly event includes an event type (such as an alarm type, a performance threshold-crossing type, or a network element anomaly log type) of the anomaly event and a subtype of the event type of the anomaly event.

The event information of the anomaly event may further include other information. For example, the event information of the network element anomaly log event may further include log content corresponding to the network element anomaly log event.

An event name of an anomaly event of the alarm type is an alarm event. The alarm type includes at least one subtype. For example, the subtype of the alarm type includes a port alarm type, a link fault alarm type, a remote port blocking alarm type, and/or a fan fault alarm type. The anomaly event of the alarm type includes an event corresponding to the subtype of the alarm type, for example, a port alarm event (corresponding to the port alarm type), a link fault alarm event (corresponding to the link fault alarm type), a remote port blocking alarm event (corresponding to the remote port blocking alarm type), and/or a fan fault alarm event (corresponding to the fan fault alarm type).

An event name of an anomaly event of the performance threshold-crossing type is a performance threshold-crossing event. The performance threshold-crossing type includes at least one subtype. For example, the subtype of the performance threshold-crossing type includes a transmission rate threshold-crossing type and/or a bit error rate threshold-crossing type. The performance threshold-crossing event of the performance threshold-crossing type includes an event corresponding to the subtype of the performance threshold-crossing type, for example, a transmission rate threshold-crossing event (corresponding to the transmission rate threshold-crossing type) and/or a bit error rate threshold-crossing event (corresponding to the bit error rate threshold-crossing type).

An event name of an anomaly event of the network element anomaly log type is a network element anomaly log event. The network element anomaly log type includes at least one subtype. For example, the subtype of the network element anomaly log type includes a link anomaly log type, a bit error rate anomaly log type, and/or a fan anomaly log type. The anomaly event of the network element anomaly log type includes an event corresponding to the subtype of the network element anomaly log type, for example, a link anomaly log event (corresponding to the link anomaly log type), a bit error rate anomaly log event (corresponding to the bit error rate anomaly log type), and/or a fan anomaly log event (corresponding to the fan anomaly log type).

The object corresponding to the anomaly event is an object that generates the anomaly event. The object information of the object includes an object identifier of the object and/or a network element identifier of a network element in which the object is located, and may further include description information of the object. The object may be a network element, a component in the network element, an endpoint that is on a network element side and that is of a link established on the network element, or the like.

For example, for the port alarm event generated by the first network element, an object corresponding to the port alarm event is the port in the first network element, and object information of the object includes a port identifier of the port and a network element identifier of the first network element. The object information of the object may further include description information of the port. The description information may be used to describe a position of the port in the first network element. For example, the description information includes a slot position of the port in the first network element.

The EMS receives event information that is of a plurality of anomaly events and that is sent by at least one network element communicating with the EMS, generates fault information based on the event information of the plurality of anomaly events, and sends the fault information to the OSS, so that the OSS can generate a fault processing rule based on the fault information. A detailed process of generating the fault information by the EMS and generating the fault processing rule by the OSS is described in detail in subsequent embodiments.

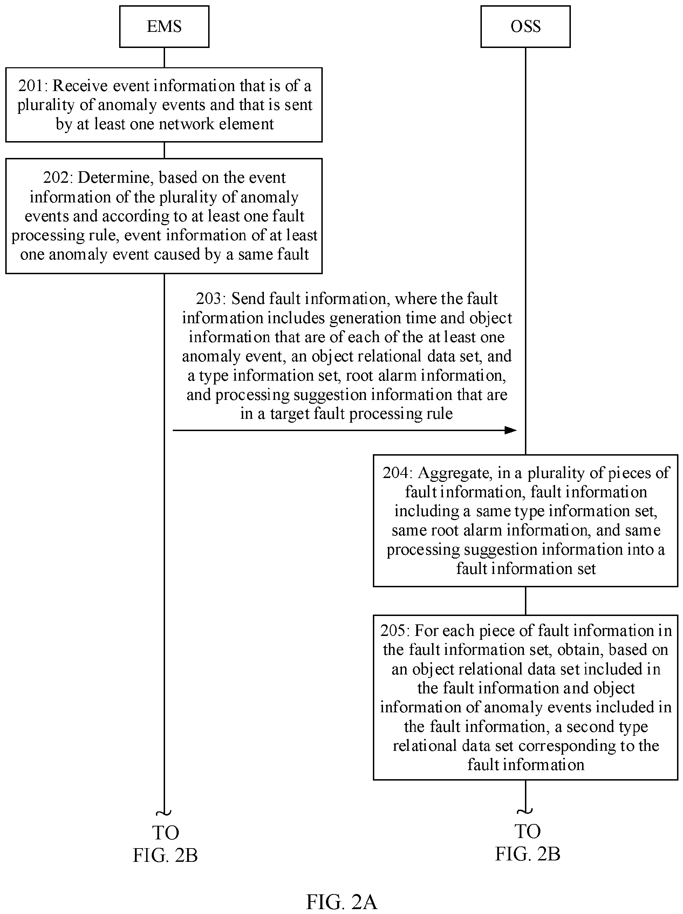

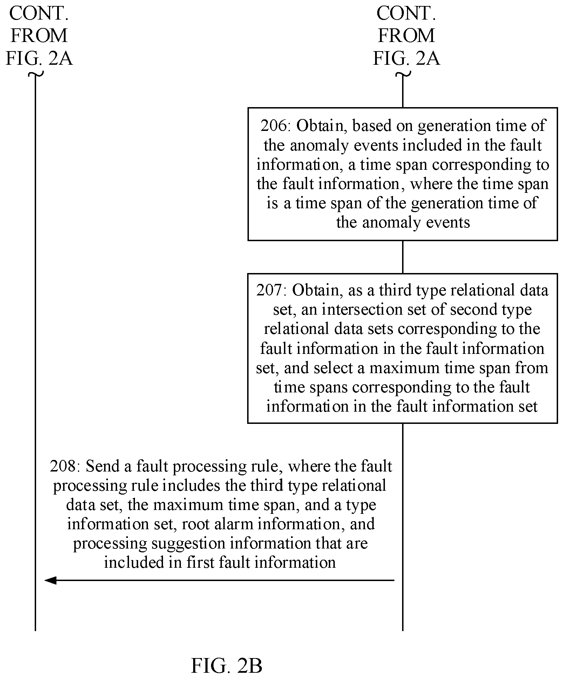

Refer to FIG. 2A and FIG. 2B. An embodiment of this application provides a fault processing method. The method may be applied to the network architecture shown in FIG. 1. In the method, an EMS generates fault information, where the fault information includes a type information set, an object relational data set, root alarm information, and processing suggestion information. An OSS receives the fault information sent by the EMS, and generates a fault processing rule based on the received fault information. The method includes the following steps.

Step 201: The EMS receives event information that is of a plurality of anomaly events and that is sent by at least one network element.

Each of the at least one network element communicates with the EMS. For example, there is a network connection between each network element and the EMS.

For ease of description, any one of the at least one network element is referred to as a first network element. When the first network element is faulty, the first network element may generate at least one anomaly event, and a second network element may also generate at least one anomaly event, where the second network element is a network element other than the first network element in the at least one network element.

The first network element sends event information of each anomaly event generated by the first network element to the EMS, and the second network element also sends event information of each anomaly event generated by the second network element to the EMS.

The EMS receives the event information of the plurality of anomaly events, where the plurality of anomaly events include at least one alarm event. Event information of any alarm event includes type information of the alarm event, generation time of the alarm event, and object information of an object corresponding to the alarm event. The type information of the alarm event includes an alarm type and a subtype of the alarm type of the alarm event. The object corresponding to the alarm event is an object that generates the alarm event. The object information of the object includes an object identifier of the object and a network element identifier of a network element in which the object is located, and may further include description information of the object.

Optionally, the event information of the alarm event may further include information such as an event identifier and/or an alarm level of the alarm event, and the event identifier may identify the alarm event in the EMS.

For example, the faulty port of the first network element listed in the embodiment shown in FIG. 1 is still used as an example. When the port of the first network element is faulty, an alarm event generated by the first network element includes a port alarm event and a link fault alarm event, and an alarm event generated by the second network element includes a remote port blocking alarm event. Therefore, refer to Table 1 below. The event information that is of the alarm event and that is received by the EMS includes event information of the port alarm event, event information of the link fault alarm event, and event information of the remote port blocking alarm event. In Table 1, a port P1 corresponding to a port identifier Port1 is the faulty port in the first network element. A port P2 corresponding to a port identifier Port2 is a port that is in the second network element and that is connected to the faulty port P1. A first link endpoint is an endpoint of a link 1 on a first network element side. The link 1 is a link established between the faulty port P1 in the first network element and the port P2 in the second network element. A link identifier of the link 1 is Link1. An endpoint identifier of the first link endpoint is Link1-1, and the first link endpoint is located in the faulty port P1. An object corresponding to the port alarm event is the port P1, an object corresponding to the link fault alarm event is the first link endpoint, and an object corresponding to the remote port blocking event is the port P2.

**Table 1**

| Alarm event | Type information | | Generation time | Object information | | | Event identifier | Alarm level |
|---|---|---|---|---|---|---|---|---|
| | Event type | Subtype | | Object identifier | Network element identifier | Description information | | |
| Port alarm event | Alarm type | Port alarm type | T1 | Port identifier Port1 of the port P1 | Network element identifier NE1 of the first network element | On a slot 1 of the first network element | Event 1 | L1 |
| Link fault alarm event | Alarm type | Link fault alarm type | T2 | Endpoint identifier Link1-1 of the first link endpoint | Network element identifier NE1 of the first network element | Empty | Event2 | L2 |
| Remote port blocking alarm event | Alarm type | Remote port blocking alarm type | T3 | Port identifier Port2 of the port P2 | Network element identifier NE2 of the second network element | On a slot 1 of the second network element | Event3 | L3 |

The plurality of anomaly events may further include at least one performance threshold-crossing event. Event information of any performance threshold-crossing event includes type information of the performance threshold-crossing event, generation time of the performance threshold-crossing event, and object information of an object corresponding to the performance threshold-crossing event. The type information of the performance threshold-crossing event includes a performance threshold-crossing type and a subtype of the performance threshold-crossing type of the performance threshold-crossing event. Optionally, the event information of the performance threshold-crossing event may further include information such as an event identifier of the performance threshold-crossing event and/or a parameter value of a performance parameter, and the event identifier may identify the performance threshold-crossing event in the EMS.

For example, when the port of the first network element is faulty, the performance threshold-crossing event generated by the first network element includes a transmission rate threshold-crossing event. Therefore, refer to Table 2 below. The event information that is of the performance threshold-crossing event and that is received by the EMS includes event information of the transmission rate threshold-crossing event, and an object corresponding to the transmission rate threshold-crossing event is also the port P1.

**Table 2**

| Performance threshold-crossing event | Type information | | Generation time | Object information | | | Event identifier | Parameter value |
|---|---|---|---|---|---|---|---|---|
| | Event type | Subtype | | Object identifier | Network element identifier | Description information | | |
| Transmission rate threshold-crossing event | Performance threshold-crossing type | Transmission rate threshold-crossing type | T4 | Port identifier Port1 of the port P1 | Network element identifier NE1 of the first network element | On the slot 1 of the first network element | Event4 | Rate 10 b/s |

The plurality of anomaly events may further include at least one network element anomaly log event. Event information of any network element anomaly log event includes type information of the network element anomaly log event, generation time of the network element anomaly log event, and object information of an object corresponding to the network element anomaly log event. The type information of the network element anomaly log event includes a network element anomaly log type and a subtype of the network element anomaly log type of the network element anomaly log event. Optionally, the event information of the network element anomaly log event may further include information such as an event identifier and/or log content of the network element anomaly log event. The event identifier may identify the network element anomaly log event in the EMS.

For example, it is assumed that when the port of the first network element is faulty, a network element anomaly log event generated by the first network element includes a port anomaly log event, and a network element anomaly log event generated by the second network element includes a link anomaly log event. Therefore, refer to Table 3 below. The event information that is of the network element anomaly log event and that is received by the EMS includes event information of the port anomaly log event and event information of the link anomaly log event. An object corresponding to the port anomaly log event is the port P1, an object of the link anomaly log event is a second link endpoint, the second link endpoint is an endpoint of the link 1 on a second network element side, and the second link endpoint is located in a port P2 of the second network element.

**Table 3**

| Network element anomaly log event | Event type | Subtype | Generation time | Object information | | | Event identifier | Log content |
|---|---|---|---|---|---|---|---|---|
| | | | | Object identifier | Network element identifier | Description information | | |
| Port anomaly log event | Network element anomaly log type | Port anomaly log type | T5 | Port identifier Port1 of the port P1 | Network element identifier NE1 of the first network element | On the slot 1 of the first network element | Event5 | Content 1 |
| Link anomaly log event | Network element anomaly log type | Link anomaly log type | T6 | Endpoint identifier Link1-2 of the second link endpoint | Network element identifier NE2 of the second network element | Empty | Event6 | Content2 |

Step 202: The EMS determines, based on the event information of the plurality of anomaly events and according to at least one fault processing rule in the EMS, event information of at least one anomaly event caused by a same fault.

The EMS may start to perform this step when receiving the event information of the anomaly events, or perform this step periodically. The event information that is of the plurality of anomaly events and that is used by the EMS in this step includes newly received event information of an anomaly event, and may further include event information of an anomaly event excluded when the fault information is generated previously, but a time difference between generation time of each of the plurality of anomaly events and current time is less than a specified time difference threshold.

The EMS stores a network topology and the at least one fault processing rule. The at least one fault processing rule may include the fault processing rule sent by the OSS and received by the EMS and/or a fault processing rule configured in the EMS. The fault processing rule sent by the OSS is generated by the OSS.

In step 202, the EMS may determine, in the following operations in 2021 to 2025, the event information of the at least one anomaly event caused by the same fault. The operations in 2021 to 2025 are as follows.

2021: The EMS selects one of the at least one fault processing rule as a target fault processing rule.

The target fault processing rule includes a type information set, a first type relational data set, root alarm information, processing suggestion information, and a time length. The type information set includes at least one subtype set, the at least one subtype set includes an alarm type set corresponding to the alarm type, and the alarm type set includes at least one subtype that belongs to the alarm type.

Optionally, the at least one subtype set may further include a performance threshold-crossing type set corresponding to the performance threshold-crossing type and/or a network element anomaly log type set corresponding to the network element anomaly log type. The performance threshold-crossing type set includes at least one subtype belonging to the performance threshold-crossing type, and the network element anomaly log type set includes at least one subtype belonging to the network element anomaly log type.

The first type relational data set includes at least one piece of type relational data, and each piece of type relational data includes two pieces of type information and a relationship between the two pieces of type information.

Optionally, during implementation, the type relational data specifically includes two subtypes and a relationship between the two subtypes, and the two subtypes may belong to a same event type or different event types. For example, <port alarm type, link fault alarm type, inclusion relationship> indicates the port alarm type and the link fault alarm type that belong to the same alarm type and the inclusion relationship between the two alarm types. For another example, <port alarm type, transmission rate threshold-crossing type, same-network-element relationship> indicates the port alarm type, the transmission rate threshold-crossing type, and the same-network-element relationship between the two subtypes, and the port alarm type and the transmission rate threshold-crossing type belong to different event types.

The root alarm information includes type information of a root alarm event. Optionally, the root alarm information includes a subtype of the root alarm event.

An example of a fault processing rule is listed below. For example, the EMS stores a fault processing rule shown in Table 4. Refer to Table 4 below. A type information set in the fault processing rule includes three subtype sets: an alarm type set, a performance threshold-crossing type set, and a network element anomaly log type set. Subtypes included in the alarm type set are a port alarm type, a link fault alarm type, and a remote port blocking alarm type. A subtype included in the performance threshold-crossing type set is a transmission rate threshold-crossing type. Subtypes included in the network element anomaly log type set are a port anomaly log type and a link anomaly log type. Type relational data included in a first type relational data set in the fault processing rule is <port alarm type, link fault alarm type, same-network-element relationship>, <port alarm type, transmission rate threshold-crossing type, same-network-element relationship>, ..., and so on. Root alarm information in the fault processing rule includes a port alarm type that is a subtype of the root alarm event, and the root alarm event is a port alarm event. Processing suggestion information in the fault processing rule is to restart a port corresponding to the root alarm event. A time length in the fault processing rule is 50 seconds.

**Table 4**

| Type information set | | | First type relational data set | Root alarm information | Processing suggestion information | Time length |
|---|---|---|---|---|---|---|
| Subtypes included in the alarm type set | Subtype included in the performance threshold-crossing type set | Subtypes included in the network element anomaly log type set | | | | |
| Port alarm type, link fault alarm type, and remote port blocking alarm type | Transmission rate threshold-crossing type | Port anomaly log type and link anomaly log type | <Port alarm type, link fault alarm type, inclusion relationship>; | Port alarm type | Restart the port corresponding to the root alarm event | 50 seconds |
| | | | <Port alarm type, transmission rate threshold-crossing type, same-network-element relationship>; | | | |
| | | | <Link anomaly log type, remote port blocking alarm type, inclusion relationship>; | | | |
| | | | <Port alarm type, remote port blocking alarm type, neighbor relationship>; | | | |
| | | | <Link fault alarm type, remote port blocking alarm type, neighbor relationship>; | | | |
| | | | <Transmission rate threshold-crossing type, remote port blocking alarm type, neighbor relationship>; and | | | |
| | | | <Port anomaly log type, remote port blocking alarm type, neighbor relationship>. | | | |

2022: The EMS determines a first set based on event information of each of the plurality of anomaly events and the type information set included in the target fault processing rule, where the first set includes an anomaly event corresponding to each piece of type information in the type information set.

The event information of each of the plurality of anomaly events includes type information, and the target fault processing rule includes the type information set. In 2022, a process of determining the first set may be: determining whether the anomaly event corresponding to each piece of type information included in the type information set exists in the plurality of anomaly events; and if the anomaly event exists, obtaining the first set, where the first set includes the anomaly event corresponding to each piece of type information in the type information set; or if the anomaly event does not exist, returning to 2021 to reselect a fault processing rule as the target fault processing rule.

Because the type information set includes the at least one subtype set, each subtype set includes at least one subtype, and the type information of each of the plurality of anomaly events also includes a subtype, during implementation, a process of determining the first set may be: determining whether an anomaly event corresponding to each subtype included in the type information set exists in the plurality of anomaly events, and if the anomaly event exists, obtaining the first set, where the first set includes the anomaly event corresponding to each subtype in the type information set.

The plurality of anomaly events may include anomaly events that do not belong to the first set. Anomaly events that belong to the first set may be used when fault information is generated next time.

For example, the EMS receives the six anomaly events shown in Table 1, Table 2, and Table 3, where the six anomaly events are the port alarm event, the link fault alarm event, the remote port blocking alarm event, the transmission rate threshold-crossing event, the port anomaly log event, and the link anomaly log event, and the EMS stores the target fault processing rule shown in Table 4. The type information set in the target fault processing rule includes six subtypes: the port alarm type, the link fault alarm type, the remote port blocking alarm type, the transmission rate threshold-crossing type, the port anomaly log type, and the link anomaly log type. The six anomaly events shown in Table 1, Table 2, and Table 3 include the port alarm event corresponding to the port alarm type, the link fault alarm event corresponding to the link fault alarm type, the remote port blocking alarm event corresponding to the remote port blocking alarm type, the transmission rate threshold-crossing event corresponding to the transmission rate threshold-crossing type, the port anomaly log event corresponding to the port anomaly log type, and the link anomaly log event corresponding to the link anomaly log type. Therefore, the obtained first set includes the port alarm event, the link fault alarm event, the remote port blocking alarm event, the transmission rate threshold-crossing event, the port anomaly log event, and the link anomaly log event.

2023: The EMS determines a second set based on the first set and the time length included in the target fault processing rule. The second set is a subset of the first set, and a time span of generation time of anomaly events included in the second set is less than or equal to the time length included in the target fault processing rule.

The time span is equal to a time difference between generation time of an earliest generated anomaly event in the second set and generation time of a latest generated anomaly event in the second set. A case in which the second set is the subset of the first set includes: The second set belongs to the first set, or the second set is the same as the first set.

In step 2023, a time span of generation time of the anomaly events in the first set is obtained, and if the time span is less than or equal to the time length included in the target fault processing rule, the first set is used as the second set. If the time span is greater than the time length included in the target fault processing rule, the earliest generated anomaly event or the latest generated anomaly event is removed from the first set. Then, a time span of generation time of remaining anomaly events in the first set is obtained. If the obtained time span is less than or equal to the time length included in the target fault processing rule, the remaining anomaly events in the first set form the second set. If the obtained time span is greater than the time length included in the target fault processing rule, an earliest generated anomaly event or a latest generated anomaly event continues to be removed from the remaining anomaly events in the first set, and the foregoing process continues to be repeated until a time span of generation time of remaining anomaly events in the first set is less than or equal to the time length in the target fault processing rule.

For example, the earliest generated anomaly event in the first set is the port anomaly event, and the latest generated anomaly event in the first set is the link anomaly log event. Based on generation time T1 of the port anomaly event and generation time T6 of the link anomaly log event, a time span of generation time of the six anomaly events in the first set is obtained as T6-T1. Assuming that T6-T1 is less than or equal to 50 seconds, the first set is used as the second set, and the second set also includes the six anomaly events. To be specific, as shown in Table 5, the second set includes the port alarm event, the link fault alarm event, the remote port blocking alarm event, the transmission rate threshold-crossing event, the port anomaly log event, and the link anomaly log event.

**Table 5**

| Anomaly events included in the second set |
|---|
| Port alarm event |
| Link fault alarm event |
| Remote port blocking alarm event |
| Transmission rate threshold-crossing event |
| Port anomaly log event |
| Link anomaly log event |

2024: When the second set includes the anomaly event corresponding to each piece of type information in the type information set of the target fault processing rule, the EMS obtains a second type relational data set based on the network topology and/or event information of each anomaly event in the second set.

The second type relational data set includes at least one piece of type relational data, each piece of type relational data includes two pieces of type information and a relationship between the two pieces of type information, and the two pieces of type information are type information of two anomaly events in the second set.

If the second set does not include an anomaly event corresponding to one or more pieces of type information in the target fault processing rule, return to 2021 to reselect a fault processing rule as the target fault processing rule.

In 2024, for ease of description, any two anomaly events in the second set are referred to as a first anomaly event and a second anomaly event, and whether at least one specified relationship exists between a first object and a second object is determined based on an object identifier of the first object and an identifier of a network element in which the first object is located, an object identifier of the second object and an identifier of a network element in which the second object is located, and/or the network topology. The first object is an object corresponding to the first anomaly event, and the second object is an object corresponding to the second anomaly event. If the at least one specified relationship exists between the first object and the second object, a specified relationship is selected from the at least one specified relationship as a relationship between the first object and the second object, where the relationship is also a relationship between type information of the first anomaly event and type information of the second anomaly event. In this way, one piece of type relational data and one piece of object relational data may be obtained, where the type relational data includes the type information of the first anomaly event, the type information of the second anomaly event, and the relationship, and the object relational data includes object information of the first object, object information of the second object, and the relationship.

Optionally, the type relational data specifically includes a subtype of the first anomaly event, a subtype of the second anomaly event, and the relationship, and the object relational data specifically includes the object identifier of the first object, the network element identifier of the network element in which the first object is located, the object identifier of the second object, the network element identifier of the network element in which the second object is located, and the relationship.

Optionally, the EMS selects, from the at least one specified relationship, a specified relationship with a highest priority or a lowest priority as the relationship between the first object and the second object.

Optionally, the specified relationship may be an inclusion relationship, a bearer relationship, a same-service relationship, a neighbor relationship, a same-network-element relationship, or the like. In this embodiment of this application, priorities of the inclusion relationship, the bearer relationship, the same-service relationship, the neighbor relationship, and the same-network-element relationship are defined, and the priorities of the relationships are different. For example, the following lists an instance of the priorities of the relationships. The instance is: the priority of the inclusion relationship>the priority of the bearer relationship>the priority of the same-service relationship>the priority of the neighbor relationship>the priority of the same-network-element relationship. In addition to the foregoing instance, the priorities of the relationships may be ranked in another instance, and details are not described herein.

The inclusion relationship means that the first object includes the second object or the second object includes the first object. For example, the first object is a board, the second object is a port on the board, and the first object includes the second object. The bearer relationship means that the first object is located on the second object or the second object is located on the first object. For example, the first object is a physical link, the second object is a logical link, and the second object is located on the first object. The same-service relationship means that the first object and the second object are for transmitting a same service. The neighbor relationship means that the first object and the second object belong to two different network elements, and the two network elements are directly connected. The same-network-element relationship means that the first object and the second object are located in a same network element.

For example, it is assumed that any two anomaly events in the second set are the port alarm event and the link fault alarm event, an object corresponding to the port alarm event is the port P1, the port P1 is located on the first network element, and an object identifier of the port alarm event is the port identifier Port1; and an object corresponding to the link fault alarm event is the first link endpoint, the first link endpoint is also located on the first network element, and an object identifier of the link fault alarm event is the endpoint identifier Link1-1. Therefore, the EMS determines, based on the object identifier Port1 of the port P1, the identifier NE1 of the first network element in which the port P1 is located, the object identifier Link1-1 of the first link endpoint, the identifier NE1 of the first network element in which the first link endpoint is located, and/or the network topology, whether at least one specified relationship exists between the port P1 and the first link endpoint. The port P1 is located on the first network element, and the first link endpoint is located on the port P1. Therefore, the inclusion relationship and the same-network-element relationship exist between the port P1 and the first link endpoint. The inclusion relationship with a higher priority is selected as a relationship between the port P1 and the first link endpoint. Therefore, one piece of type relational data and one piece of object relational data may be obtained, where the type relational data is <port alarm type, link fault alarm type, inclusion relationship>, and the object relational data is <object information of the port P 1, object information of the first link endpoint, inclusion relationship>.

Optionally, the EMS determines, in the following operations (1) to (4), whether the at least one specified relationship exists between the first object and the second object. The operations (1) to (4) may be as follows.
(1) The EMS obtains, from event information of the first anomaly event, the type information of the first anomaly event, the object identifier of the first object, and the identifier of the network element in which the first object is located, and obtains, from event information of the second anomaly event, the type information of the second anomaly event, the object identifier of the second object, and the identifier of the network element in which the second object is located.

For example, the port alarm event and the link fault alarm event included in the second set are still used as an example. Refer to Table 1. The event information of the port alarm event includes the port alarm type, the port identifier Port1 of the port P1 (where the port P1 is an object, and the port identifier Port1 is an object identifier), and the identifier NE1 of the network element in which the port P1 is located. The event information of the link fault alarm event includes the link fault alarm type, the endpoint identifier Link1-1 of the first link endpoint (where the first link endpoint is an object, and the endpoint identifier Link1-1 is an object identifier), and the identifier NE1 of the network element in which the first link endpoint is located. Therefore, the EMS obtains, from the event information of the port alarm event, the port alarm type of the port alarm event, the port identifier Port1 of the port P1, and the identifier NE1 of the network element in which the port P1 is located, and obtains, from the event information of the link fault alarm event, the link fault alarm type of the link fault alarm event, the endpoint identifier Link1-1 of the first link endpoint, and the identifier NE1 of the network element in which the first link endpoint is located.

For another example, the port alarm event and the link anomaly log event included in the second set are used as an example. Refer to Table 3. The event information of the link anomaly log event includes the link anomaly log type, the endpoint identifier Link 1-2 of the second link endpoint (where the second link endpoint is an object, and the endpoint identifier Link1-2 is an object identifier), and the identifier NE2 of the network element in which the second link endpoint is located. Therefore, the EMS obtains, from the event information of the link anomaly log event, the link anomaly log type, the endpoint identifier Link1-2 of the second link endpoint, and the identifier NE2 of the network element in which the second link endpoint is located.

(2) The EMS determines, based on the identifier of the network element in which the first object is located and the identifier of the network element in which the second object is located, whether the first object and the second object are located in a same network element. If determining that the first object and the second object are located in the same network element, the EMS performs the following operation (3). If determining that the first object and the second object are located in different network elements, the EMS performs the following operation (4).

For example, the EMS determines, based on the identifier NE1 of the network element in which the port P1 is located and the identifier NE1 of the network element in which the first link endpoint is located, that the port P1 and the first link endpoint are located in the first network element, in other words, the port P1 and the first link endpoint are located in the same network element, and performs the following operation (3).

For another example, the EMS determines, based on the identifier NE1 of the network element in which the port P1 is located and the identifier NE2 of the network element in which the second link endpoint is located, that the port P1 and the second link endpoint are located in different network elements, and performs the following operation (4).

(3) The EMS determines, based on the object identifier of the first object and the object identifier of the second object, the at least one specified relationship existing between the first object and the second object, where the at least one specified relationship may include the inclusion relationship and/or the same-network-element relationship, and the process ends.

The EMS further selects, from the at least one specified relationship, the specified relationship with the highest priority or the lowest priority as the relationship between the first object and the second object.

For example, for the port alarm event and the link fault alarm event listed above, the object corresponding to the port alarm event is the port P1, and the object corresponding to the link fault alarm event is the first link endpoint. The EMS determines, based on the endpoint identifier Link1-1 of the first link endpoint and the port identifier Port1 of the port P1, that the port P1 includes the first link endpoint. Therefore, the EMS determines that the inclusion relationship and the same-network-element relationship exist between the first link endpoint and the port P1. The priority of the inclusion relationship is higher than that of the same-network-element relationship. Therefore, the EMS determines that the relationship between the first link endpoint and the port P1 is the inclusion relationship. In this way, one piece of object relational data is obtained, where the object relational data is <object information of the first link endpoint, object information of the port P1, inclusion relationship>, and one piece of type relational data is obtained, where the type relational data is <port alarm type, link fault alarm type, inclusion relationship>.

(4) The EMS determines, based on the network topology, the object identifier of the first object and the identifier of the network element in which the first object is located, and the object identifier of the second object and the identifier of the network element in which the second object is located, whether the at least one specified relationship exists between the first object and the second object, where the at least one specified relationship may include the neighbor relationship, the service relationship, and/or the bearer relationship.

If the at least one specified relationship exists between the first object and the second object, the EMS selects, from the at least one specified relationship, the specified relationship with the highest or lowest priority as the relationship between the first object and the second object. If no specified relationship exists between the first object and the second object, it indicates that no relationship exists between the first object and the second object, and no relationship exists between the type information of the first anomaly event and the type information of the second anomaly event.

For example, for the port alarm event and the link anomaly log event listed above, the object corresponding to the port alarm event is the port P1, and the object corresponding to the link anomaly log event is the second link endpoint. The port P1 is located in the first network element, the second link endpoint is located in the port P2 of the second network element, and the second link endpoint and the first link endpoint that is in the port P1 are two endpoints of the same link 1. Therefore, the EMS determines, based on the network topology, the port identifier Port1 of the port P1 and the network element identifier NE1 of the first network element in which the port P1 is located, and the endpoint identifier Link 1-2 of the second link endpoint and the network element identifier NE2 of the second network element in which the second link endpoint is located, that the neighbor relationship exists between the port P1 and the second link endpoint. The EMS determines the neighbor relationship as a relationship between the port P1 and the second link endpoint. In this way, one piece of object relational data is obtained, where the object relational data is <object information of the port P1, object information of the second link endpoint, and neighbor relationship>, and one piece of type relational data is obtained, where the type relational data is <port alarm type, remote port blocking alarm type, neighbor relationship>.

After the operations in 2024, the EMS not only obtains the second type relational data set, but may also obtain an object relational data set. For example, for the port alarm event, the link fault alarm event, the remote port blocking alarm event, the transmission rate threshold-crossing event, the port anomaly log event, and the link anomaly log event that are included in the second set, after performing the foregoing processes on any two anomaly events in the second set, the EMS obtains a second type relational data set shown in Table 6 below and an object relational data set shown in Table 7 below.

**Table 6**

| Second type relational data set |
|---|
| <Port alarm type, link fault alarm type, inclusion relationship> |
| <Port alarm type, transmission rate threshold-crossing type, same-network-element relationship> |
| <Link anomaly log type, remote port blocking alarm type, inclusion relationship> |
| <Port alarm type, remote port blocking alarm type, neighbor relationship> |
| <Link fault alarm type, remote port blocking alarm type, neighbor relationship> |
| <Transmission rate threshold-crossing type, remote port blocking alarm type, neighbor relationship> |
| <Port anomaly log type, remote port blocking alarm type, neighbor relationship> |
| <Port alarm type, link anomaly log type, neighbor relationship> |
| <Link fault alarm type, link anomaly log type, same-service relationship> |
| <Transmission rate threshold-crossing type, link anomaly log type, neighbor relationship> |
| <Port anomaly log type, link anomaly log type, neighbor relationship> |

**Table 7**

| Object relational data set |
|---|
| <Object information of the port P1, object information of the first link endpoint, inclusion relationship> |
| <Object information of the port P1, object information of the port P2, neighbor relationship> |
| <Object information of the port P1, object information of the second link endpoint, neighbor relationship> |
| <Object information of the first link endpoint, object information of the port P2, neighbor relationship> |
| <Object information of the first link endpoint, object information of the second link endpoint, same-service relationship> |
| <Object information of the port P2, object information of the second link endpoint, inclusion relationship> |

2025: When the second type relational data set includes the first type relational data set in the target fault processing rule, determine that the event information of each anomaly event in the second set is event information of an anomaly event caused by a same fault.

When the second type relational data set does not include the first type relational data set, return to 2021 to reselect a fault processing rule as the target fault processing rule.

The target fault processing rule includes the type information set and the first type relational data set, and the anomaly event included in the second set is the anomaly event corresponding to each piece of type information in the type information set. When the second type relational data set includes the first type relational data set, it indicates that each piece of type relational data in the first type relational data set may match two anomaly events in the second set.

For example, the second type relational data set shown in Table 6 includes the first type relational data set in the target fault processing rule shown in Table 4. For any piece of type relational data in the first type relational data set in Table 4, where the type relational data <port alarm type, link fault alarm type, inclusion relationship> is used as an example, the second set includes the port alarm event corresponding to the port alarm type and the link fault alarm event corresponding to the link fault alarm type, and the second type relational data set shown in Table 6 records that the relationship between the port alarm type of the port alarm event and the link fault alarm type of the link fault alarm event is also the inclusion relationship. Therefore, the <port alarm type, link fault alarm type, inclusion relationship> matches the port alarm event and the link fault alarm event that are in the second set. Similarly, each of the other type relational data in the first type relational data set matches anomaly events in the second set. Therefore, the EMS may determine that the event information of the port alarm event in the second set, the event information of the link fault alarm event in the second set, the event information of the remote port blocking alarm event in the second set, the event information of the transmission rate threshold-crossing event in the second set, the event information of the port anomaly log event in the second set, and the event information of the link anomaly log event in the second set are event information of anomaly events caused by a same fault.

Step 203: The EMS sends the fault information to the OSS, where the fault information includes generation time and object information that are of each of the at least one anomaly event, the object relational data set, and the type information set, the root alarm information, and the processing suggestion information that are in the target fault processing rule.

The at least one anomaly event is the anomaly event in the second set obtained in step 202. The target fault processing rule is a fault processing rule that matches the at least one anomaly event and that is obtained in step 202, and the object relational data set is also the object relational data set obtained in step 202. The type information included in the type information set of the target fault processing rule is type information of each of the at least one anomaly event.

In step 203, the EMS uses the generation time of each of the at least one anomaly event, the object information of each anomaly event, the object relational data set, and the type information set, the root alarm information, and the processing suggestion information that are in the target fault processing rule, to form the fault information, and sends the fault information to the OSS.

For example, in step 202, the EMS determines that the event information of the port alarm event in the second set, the event information of the link fault alarm event in the second set, the event information of the remote port blocking alarm event in the second set, the event information of the transmission rate threshold-crossing event in the second set, the event information of the port anomaly log event in the second set, and the event information of the link anomaly log event in the second set are the event information of the anomaly events caused by the same fault, and obtains the object relational data set shown in Table 7. In this way, in step 203, the EMS uses the generation time T1 and the object information of the port alarm event, the generation time T2 and the object information of the link fault alarm event, the generation time T3 and the object information of the remote port blocking alarm event, the generation time T4 and the object information of the transmission rate threshold-crossing event, the generation time T5 and the object information of the port anomaly log event, the generation time T6 and the object information of the link anomaly log event, the object relational data set shown in Table 6, and the type information set, the root alarm information, and the processing suggestion information that are in the target fault processing rule shown in Table 4, to form fault information shown in Table 8 below.

**Table 8**

| Object information | Generation time | Type information set | | | Object relational data set | Root alarm event | Processing suggestion information |
|---|---|---|---|---|---|---|---|
| | | Subtypes included in the alarm type set | Subtype included in the performance threshold-crossing type set | Subtypes included in the network element anomaly log type set | | | |
| Object information of the port alarm event, object information of the link fault alarm | Generation time T1 of the port alarm event, generation time T2 of the link fault alarm | Port alarm type, link fault alarm type, and remote port | Transmission rate threshold-crossing type | Port anomaly log type and link anomaly log type | <Object information of the port P1, object information of the first link endpoint, inclusion relationship>; | Port alarm event | Restart the port corresponding to the root alarm event |
| event, object information of the remote port blocking alarm event, object information of the transmission rate threshold-crossing event, object information of the port anomaly log event, and object information of the link anomaly log event. | event, generation time T3 of the remote port blocking alarm event, generation time T4 of the transmission rate threshold-crossing event, generation time T5 of the port anomaly log event, and generation time T6 of the link anomaly log event | blocking alarm type | | | <Object information of the port P1, object information of the port P2, neighbor relationship>; | | |
| | | | | | <Object information of the port P1, object information of the second link endpoint, neighbor relationship>; | | |
| | | | | | <Object information of the first link endpoint, object information of the port P2, neighbor relationship>; | | |
| | | | | | <Object information of the first link endpoint, object information of the second link endpoint, same- | | |
| | | | | | service relationship>; and <Object information of the port P2, object information of the second link endpoint, same-network-element relationship>. | | |

It should be noted that for the type information set included in the fault information, and the generation time and the object information that are of each of the at least one anomaly event and that are included in the fault information, because the type information included in the type information set is the type information of each anomaly event, the type information set and the generation time and the object information that are of each anomaly event jointly form event information of each anomaly event. Therefore, the fault information essentially includes the event information of each anomaly event, the object relational data set, the root alarm information, and the processing suggestion information.

For example, refer to the fault information shown in Table 8. Table 8 includes the object information, the generation time T1, and the port alarm type that are of the port alarm event, the object information, the generation time T2, and the link fault alarm type that are of the link fault alarm event, the object information, the generation time T3, and the remote port blocking alarm type that are of the remote port blocking alarm event, the object information, the generation time T4, and the transmission rate threshold-crossing type that are of the transmission rate threshold-crossing event, the object information, the generation time T5, and the port anomaly log type that are of the port anomaly log event, and the object information, the generation time T6, and the link anomaly log type that are of the link anomaly log event. Therefore, the fault information shown in Table 8 essentially includes the event information of the port alarm event, the event information of the link fault alarm event, the event information of the remote port blocking alarm event, the event information of the transmission rate threshold-crossing event, the event information of the port anomaly log event, the event information of the link anomaly log event, the object relational data set shown in Table 7, and the root alarm information and the processing suggestion information in the target fault processing rule shown in Table 4.

Optionally, in addition to type information, generation time, and object information that are of any anomaly event in the at least one anomaly event, event information of the anomaly event may further include other information, and the fault information may further include the other information. For example, the port alarm event is used as an example. In addition to the type information, the generation time, and the object information that are of the port alarm event, the event information of the port alarm event further includes the event identifier Event1 and the alarm level L1. Therefore, the fault information shown in Table 8 may further include the event identifier Event1 and the alarm level L1.

Optionally, the fault information further includes the second type relational data set.

Optionally, the EMS may further obtain one or more of fault occurrence location information, fault start time, fault end time, and the like. The fault information may further include one or more of the fault occurrence location information, the fault start time, the fault end time, and the like.

The fault occurrence location information includes a location of a network element that generates the root alarm event. Optionally, the fault occurrence location information may be a geographical location of the network element. For example, the fault occurrence location information may be longitude and latitude coordinates of the network element or a name of a location of the network element.

The fault start time can be generation time of the root alarm event. In addition, after the fault in the network element disappears, the network element notifies the EMS that the fault disappears. Therefore, the fault end time is the time at which the EMS receives the notification that the fault disappears.

After the EMS obtains the target fault processing rule through matching, the EMS may further process, based on the processing suggestion information included in the target fault processing rule, the fault generated in the network element. For example, it is assumed that the target fault processing rule is the fault processing rule shown in Table 4, and the port P1 in the first network element is restarted based on the processing suggestion information "restart the port corresponding to the root alarm event" in the target fault processing rule.

The EMS may determine event information of anomaly events caused by a plurality of faults, generate, based on event information of anomaly events caused by each fault, fault information corresponding to each fault, and send the fault information corresponding to each fault to the OSS.

There may be a plurality of EMSs that communicate with the OSS, in other words, one or more EMSs may send generated fault information to the OSS.

Step 204: The OSS receives a plurality of pieces of fault information, and aggregates, in the plurality of pieces of fault information, fault information including a same type information set, same root alarm information, and same processing suggestion information into a fault information set.

Type information set, root alarm information, and processing suggestion information included in each of the plurality of pieces of fault information may be the same. Therefore, the OSS may aggregate the plurality of pieces of fault information into one fault information set. Alternatively, type information set, root alarm information, and processing suggestion information included in each of the plurality of pieces of fault information may not be the same. Therefore, the OSS may aggregate the plurality of pieces of fault information into a plurality of fault information sets.

Each fault information set obtained by the OSS corresponds to a fault.

For example, the plurality of pieces of fault information received by the OSS include the fault information shown in Table 8. The OSS aggregates, from the plurality of pieces of received fault information and into a fault information set, fault information including the type information set, the root alarm information, and the processing suggestion information that are included in the fault information shown in Table 8. Therefore, the type information set of each piece of fault information in the fault information set includes the port alarm type, the link fault alarm type, the remote port blocking alarm type, the transmission rate threshold-crossing type, the port anomaly log type, and the link anomaly log type. The root alarm information included in each piece of fault information in the fault information set is the port alarm type, and the processing suggestion information included in each piece of fault information in the fault information set is to restart the port corresponding to the root alarm event.

It should be noted that, after receiving fault information, the OSS draws an object topology based on an object relational data set included in the fault information, and displays the object topology, where the fault information includes content such as root alarm information, processing suggestion information, and generation time, object information, and type information that are of each anomaly event, for an operations and maintenance personnel to view.

Optionally, the OSS determines, based on the object topology and the content included in the fault information, for example, the root alarm information, the processing suggestion information, and the type information, the generation time, and/or the object information that are of each anomaly event, a process in which the EMS locates a root, and/or determines an object that needs to be repaired and a network element in which the object is located, so as to prompt the operations and maintenance personnel to repair the object.

Step 205: For each piece of fault information in the fault information set, the OSS obtains, based on an object relational data set included in the fault information and object information of anomaly events included in the fault information, a second type relational data set corresponding to the fault information.

The fault information set is any one of the one or more fault information sets obtained through aggregation in step 202.

In step 205, for ease of description, any two anomaly events included in the fault information are referred to as a first anomaly event and a second anomaly event. If the object relational data set includes object relational data including object information of the first anomaly event and object information of the second anomaly event, a relationship included in the object relational data is used as a relationship between type information of the first anomaly event and type information of the second anomaly event, so as to obtain one piece of type relational data, where the type relational data includes the type information of the first anomaly event, the type information of the second anomaly event, and the relationship. If the object relational data set does not include object relational data including object information of the first anomaly event and object information of the second anomaly event, the OSS knows that there is no relationship between type information of the first anomaly event and type information of the second anomaly event. The foregoing process is repeated for any other two anomaly events in the fault information, so as to obtain a plurality of pieces of different type relational data, where the plurality of pieces of type relational data form the second type relational data set corresponding to the fault information.

For example, the fault information shown in Table 8 is used as an example. For any two fault events included in Table 8, it is assumed that the two fault events are the port alarm event and the link fault alarm event, the object corresponding to the port alarm event is the port P1, and the object corresponding to the link fault alarm event is the first link endpoint. The object relational data set included in Table 8 includes one piece of object relational data <object information of the port P1, object information of the first link endpoint, inclusion relationship>, in other words, the object relational data set included in Table 8 includes object relational data including the object information of the port alarm event and the object information of the link fault alarm event. Therefore, one piece of type relational data is obtained, where the type relational data includes the type information of the port alarm event, the type information of the link fault alarm event, and the inclusion relationship, and the type relational data may be represented as <port alarm type, link fault alarm type, inclusion relationship>. The foregoing process is repeated for any other two anomaly events in Table 8, and the OSS finally obtains the second type relational data set shown in Table 6.

Step 205 is an optional step. If any piece of fault information in the fault information set includes the second type relational data set, the OSS may not need to perform the operation in step 205.

Step 206: The OSS obtains, based on generation time of the anomaly events included in the fault information, a time span corresponding to the fault information, where the time span is a time span of the generation time of the anomaly events.

In step 206, the OSS reads, from the fault information, generation time of a latest generated anomaly event and generation time of an earliest generated anomaly event, and determines, based on the two pieces of read generation time, the time span corresponding to the fault information.

For example, the OSS reads, from the fault information shown in Table 8, the generation time T6 of the latest generated link anomaly log event and the generation time T1 of the earliest generated port alarm event, and determines, based on the generation time T6 and T1, the time span corresponding to the fault information as T6-T1.

Optionally, there is no execution sequence between step 205 and step 206. To be specific, the OSS may perform step 205 before performing step 206; or the OSS performs step 205 and step 206 at the same time; or the OSS performs step 206 before performing step 205.

Step 207: The OSS obtains, as a third type relational data set, an intersection set of second type relational data sets corresponding to the fault information in the fault information set, and selects a maximum time span from time spans corresponding to the fault information in the fault information set.

In step 207, the OSS may perform the following operations in 2071 to 2073 for implementation, and the operations in 2071 to 2073 are as follows.

2071: The OSS divides the fault information set into a plurality of subsets, where a second type relational data set and a time span that correspond to fault information included in each subset are both the same.

In step 2071, the OSS may classify the fault information in the fault information set based on second type relational data sets and time spans, and classify a type of fault information corresponding to a same second type relational data set and a same time span into one subset.

2072: The OSS selects, from the divided subsets, a plurality of subsets that meet a first specified condition, where the first specified condition is that a ratio of a total quantity of pieces of fault information included in the plurality of subsets to a total quantity of pieces of fault information included in the fault information set exceeds a specified ratio.

A process of selecting the subsets in 2072 may be as follows: The OSS selects, from the divided subsets, m subsets that each include a largest quantity of pieces of fault information, where m is an integer greater than or equal to 2. The OSS calculates a ratio of a total quantity of pieces of fault information included in the m subsets to the total quantity of pieces of fault information included in the fault information set, and perform the following operation in 2073 when the ratio exceeds the specified ratio.

When the ratio does not exceed the specified ratio, the OSS selects, from remaining unselected subsets, n subsets that each include a largest quantity of pieces of fault information, where n is an integer greater than or equal to 1. In this case, the OSS selects m+n subsets in total. The OSS calculates a ratio of a total quantity of pieces of fault information included in the m+n subsets to the total quantity of pieces of fault information included in the fault information set, and perform the following operation in 2073 when the ratio exceeds the specified ratio. When the ratio does not exceed the specified ratio, the OSS selects, from remaining unselected subsets, n subsets that each include a largest quantity of pieces of fault information. In this case, the OSS selects m+2n subsets in total, and then performs the foregoing operations of calculating a ratio and selecting subsets until a ratio of a total quantity of pieces of fault information included in the selected subsets to the total quantity of pieces of fault information included in the fault information set exceeds the specified ratio.

The specified ratio may be 0.9, 0.8, 0.7, or the like.

2073: The OSS obtains, as the third type relational data set, an intersection set of second type relational data sets corresponding to all fault information in the selected subsets, and selects a maximum time span from time spans corresponding to all fault information in the selected subsets.

The maximum time span is duration of an anomaly event caused by a fault corresponding to the fault information set.

Step 208: The OSS sends a fault processing rule to at least one EMS, where the fault processing rule includes the third type relational data set, the maximum time span, and a type information set, root alarm information, and processing suggestion information that are included in first fault information, and the first fault information is any piece of fault information in the fault information set.

In step 208, the OSS uses the third type relational data set, the maximum time span, and the type information set, the root alarm information, and the processing suggestion information that are included in the first fault information, to form the fault processing rule, and sends the fault processing rule to the at least one EMS communicating with the OSS.

Each piece of type relational data in the third type relational data set includes two pieces of type information, and the OSS determines whether type information included in the third type relational data set includes all type information in the type information set in the first fault information. If the type information includes all the type information in the type information set, the OSS uses the third type relational data set, the maximum time span, and the type information set, the root alarm information, and the processing suggestion information that are included in the first fault information, to form the fault processing rule. If the type information does not include all the type information in the type information set, the OSS discards the third type relational data set, the maximum time span, and the fault information set.

In step 204, the OSS may obtain a plurality of fault information sets through aggregation. The OSS performs operations in steps 205 to 208 on each fault information set, to obtain one or more fault processing rules, and then sends the one or more fault processing rules to the at least one EMS communicating with the OSS.

After the OSS sends the fault processing rule to the EMS communicating with the OSS, the EMS receives the fault processing rule and stores the fault processing rule. Then, the EMS may further use the fault processing rule to match event information of an anomaly event caused by a same fault, and/or process a fault that occurs on a network element, that is, the EMS continues to perform step 201 and subsequent steps.

Optionally, an operation that the EMS stores the foregoing fault processing rule may be: for the type information set, the root alarm information, and the processing suggestion information that are in the foregoing fault processing rule, when the EMS locally stores a fault processing rule including the type information set, the root alarm information, and the processing suggestion information, updating the fault processing rule that is locally stored in the EMS and includes the type information set, the root alarm information, and the processing suggestion information to the foregoing fault processing rule; or when the EMS does not locally store a fault processing rule including the type information set, the root alarm information, and the processing suggestion information, directly storing the foregoing fault processing rule.

In this embodiment of this application, the EMS receives the event information of the plurality of anomaly events, identifies, by using the fault processing rule included in the EMS, event information of each anomaly event caused by a same fault, and obtains fault information based on the event information of each anomaly event. The fault information includes type information of each anomaly event, generation time of each anomaly event, object information of each anomaly event, an object relational data set, and the root alarm information and the processing suggestion information that are in the fault processing rule. Because the fault information includes the type information of each anomaly event, the object information of each anomaly event, and the object relational data set, the OSS may obtain a relationship between type information of different anomaly events based on the type information of each anomaly event, the object information of each anomaly event, and the object relational data set, so as to generate a fault processing rule, and send the fault processing rule to different EMSs. Because the different EMSs may all receive the fault processing rule for processing a fault, the different EMSs may process the fault. Because the OSS receives a plurality of pieces of fault information sent by different EMSs, the OSS may automatically generate the fault processing rule based on a large amount of fault information, so that the fault processing rule is learnable and updateable, precision of generating the fault processing rule is improved, and efficiency of generating the fault processing rule is improved. The OSS sends the generated fault processing rule to the different EMSs. In this way, efficiency and real-time performance of configuring the fault processing rule in the EMSs can be improved, and the different EMSs can process, according to the fault processing rule, the fault corresponding to the fault processing rule.

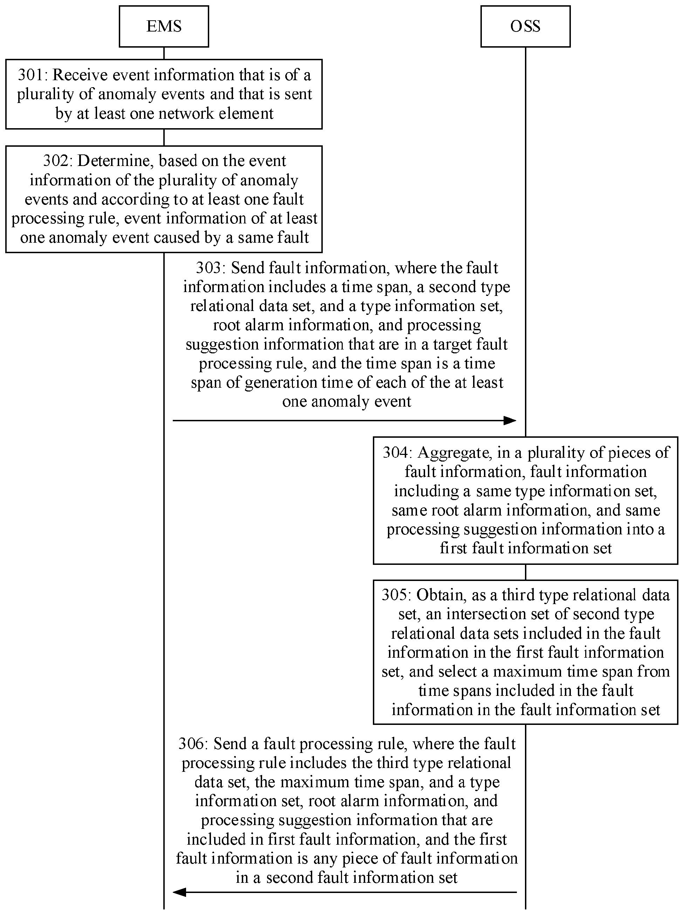

Refer to FIG. 3. An embodiment of this application provides a fault processing method. The method may be applied to the network architecture shown in FIG. 1. In the method, an EMS generates fault information, where the fault information includes a type information set, a second type relational data set, root alarm information, processing suggestion information, and a time span. An OSS receives the fault information sent by the EMS, and generates a fault processing rule based on the received fault information. The method includes the following steps.

Steps 301 and 302 are the same as steps 201 and 202 respectively, and details are not described herein again.

After step 302, the EMS may obtain event information of at least one anomaly event caused by a same fault, the second type relational data information set, and a target fault processing rule that matches the at least one anomaly event.

The port alarm event, link fault alarm event, remote port blocking alarm event, transmission rate threshold-crossing event, port anomaly log event, and link anomaly log event shown in Table 1, Table 2, and Table 3 are still used as an example. After the EMS processes the six anomaly events in steps 301 and 302, the EMS knows that the six anomaly events are anomaly events caused by a same fault, and obtains the target fault processing rule that matches the six anomaly events and that is shown in Table 4 and the second type relational data set that is shown in Table 6.

Step 303: The EMS sends fault information to the OSS, where the fault information includes a time span, the second type relational data set, and a type information set, root alarm information, and processing suggestion information that are in the target fault processing rule, and the time span is a time span of generation time of each of the at least one anomaly event.

In step 303, the EMS obtains the time span based on the generation time of each of the at least one anomaly event, uses the time span, the second type relational data set, and the type information set, the root alarm information, and the processing suggestion information that are in the target fault processing rule, to form the fault information, and sends the fault information to the OSS.

For example, the EMS obtains the time span as T6-T1 based on generation time T1 of the port alarm event, generation time T2 of the link fault alarm event, generation time T3 of the remote port blocking alarm event, generation time T4 of the transmission rate threshold-crossing event, generation time T5 of the port anomaly log event, and generation time T6 of the link anomaly log event. The EMS uses the time span T6-T1, the second type relational data set shown in Table 6, and the type information set, the root alarm information, and the processing suggestion information that are in the target fault processing rule shown in Table 4, to form fault information shown in Table 9 below.

**Table 9**

| Type information set | | | Second type relational data set | Root alarm information | Processing suggestion information | Time span |
|---|---|---|---|---|---|---|
| Subtypes included in the alarm type set | Subtype included in the performance threshold-crossing type set | Subtypes included in the network element anomaly log type set | | | | |
| Port alarm type, link fault alarm type, and remote port blocking alarm type | Transmission rate threshold-crossing type | Port anomaly log type and link anomaly log type | <Port alarm type, link fault alarm type, inclusion relationship>; | Port alarm type | Restart a port corresponding to a root alarm event | T6-T1 |
| | | | <Port alarm type, transmission rate threshold-crossing type, same-network-element relationship>; | | | |
| | | | <Link anomaly log type, remote port blocking alarm type, inclusion relationship>; | | | |
| | | | <Port alarm type, remote port blocking alarm type, neighbor relationship>; | | | |
| | | | <Link fault alarm type, remote port blocking alarm type, neighbor relationship>; | | | |
| | | | <Transmission rate threshold-crossing type, remote port blocking alarm type, neighbor relationship>; | | | |
| | | | <Port anomaly log type, remote port blocking alarm type, neighbor relationship>; | | | |
| | | | <Port alarm type, link anomaly log type, neighbor relationship>; | | | |
| | | | <Link fault alarm type, link anomaly log type, same-service relationship>; | | | |
| | | | <Transmission rate threshold-crossing type, link anomaly log type, neighbor relationship>; and | | | |
| | | | <Port anomaly log type, link anomaly log type, neighbor | | | |
| | | | relationship>. | | | |

Because a data amount of event type sets included in the fault information is less than a data amount of the event information of the at least one anomaly event, the data amount of the fault information in this step is relatively small, so that the data amount of the fault information can be reduced, thereby reducing occupation of network resources.

The EMS may determine event information of anomaly events caused by a plurality of faults, generate, based on the event information of the anomaly event caused by each fault, fault information corresponding to each fault, and send the fault information corresponding to each fault to the OSS.

There may be a plurality of EMSs that communicate with the OSS, in other words, one or more EMSs may send generated fault information to the OSS.

Step 304: The OSS receives a plurality of pieces of fault information, and aggregates, in the plurality of pieces of fault information, fault information including a same type information set, same root alarm information, and same processing suggestion information into a first fault information set.

For a detailed implementation process in which the OSS obtains the first fault information set through aggregation, refer to related content in step 204 in the embodiment shown in FIG. 2A and FIG. 2B, and details are not described herein again.

It should be noted that some of the plurality of pieces of fault information received by the OSS may be completely the same.

Step 305: The OSS obtains, as a third type relational data set, an intersection set of second type relational data sets included in the fault information in the first fault information set, and selects a maximum time span from time spans included in the fault information in the fault information set.

In step 305, the OSS may perform the following operations in 3051 to 3053 for implementation, and the operations in 3051 to 3053 are as follows.

3051: For any plurality of pieces of same fault information in the first fault information set, the OSS counts information quantities of the plurality of pieces of fault information, and performs deduplication processing in the first fault information set to obtain a second fault information set. In this way, each piece of fault information retained in the second fault information set is different.

Each piece of fault information in the second fault information set obtained by performing deduplication corresponds to one information quantity.

3052: The OSS selects, from the fault information set after deduplication, a plurality of pieces of fault information that meet a second specified condition, where the second specified condition is that a ratio of an accumulated value of information quantities corresponding to the plurality of pieces of fault information to a total accumulated value of information quantities corresponding to all pieces of fault information included in the second fault information set exceeds a specified ratio.

A process of selecting the plurality of pieces of fault information in 3052 may be as follows: The OSS selects, from the second fault information set, m pieces of fault information each corresponding to a largest information quantity, where m is an integer greater than or equal to 2. The OSS calculates a ratio of an accumulated value of information quantities corresponding to the m pieces of fault information to the total accumulated value of information quantities corresponding to all the pieces of fault information included in the second fault information set, and performs the following operation in 3053 when the ratio exceeds the specified ratio.

When the ratio does not exceed the specified ratio, the OSS selects, from remaining unselected fault information in the second fault information set, n pieces of fault information each corresponding to a largest information quantity, where n is an integer greater than or equal to 1. In this case, the OSS selects m+n pieces of fault information in total. The OSS calculates a ratio of an accumulated value of information quantities corresponding to the m+n pieces of fault information to the total accumulated value, and performs the following operation in 2053 when the ratio exceeds the specified ratio. When the ratio does not exceed the specified ratio, the OSS selects, from remaining unselected fault information in the second fault information set, n pieces of fault information each corresponding to a largest information quantity. In this case, the OSS selects m+2n pieces of fault information in total, and then performs the foregoing operations of calculating a ratio and selecting fault information until the selected plurality of pieces of fault information meet the second specified condition.

3053: The OSS obtains, as the third type relational data set, an intersection set of second type relational data sets included in all the pieces of selected fault information, and selects the maximum time span from time spans included in all the pieces of selected fault information.

The maximum time span is duration of an anomaly event caused by a fault corresponding to the fault information set.

Step 306: The OSS sends a fault processing rule to at least one EMS, where the fault processing rule includes the third type relational data set, the maximum time span, and a type information set, root alarm information, and processing suggestion information that are included in first fault information, and the first fault information is any piece of fault information in the second fault information set.

In step 306, the OSS uses the third type relational data set, the maximum time span, and the type information set, the root alarm information, and the processing suggestion information that are included in the first fault information, to form the fault processing rule, and sends the fault processing rule to the at least one EMS communicating with the OSS.

Each piece of type relational data in the third type relational data set includes two pieces of type information, and the OSS determines whether type information included in the third type relational data set includes all type information in the type information set in the first fault information. If the type information includes all the type information in the type information set, the OSS uses the third type relational data set, the maximum time span, and the type information set, the root alarm information, and the processing suggestion information that are included in the first fault information, to form the fault processing rule. If the type information does not include all the type information in the type information set, the OSS discards the third type relational data set, the maximum time span, and the fault information set.

In step 304, the OSS may obtain a plurality of fault information sets through aggregation. The OSS performs the operations in step 305 on each fault information set, to obtain one or more fault processing rules, and then sends the one or more fault processing rules to the at least one EMS communicating with the OSS.

After the OSS sends the fault processing rule to the EMS communicating with the OSS, the EMS receives the fault processing rule and stores the fault processing rule. Then, the EMS may further use the fault processing rule to match event information of an anomaly event caused by a same fault, and/or process a fault that occurs on a network element, that is, the EMS continues to perform step 301 and subsequent steps.

Optionally, an operation that the EMS stores the foregoing fault processing rule may be: for the type information set, the root alarm information, and the processing suggestion information that are in the foregoing fault processing rule, when the EMS locally stores a fault processing rule including the type information set, the root alarm information, and the processing suggestion information, updating the fault processing rule that is locally stored in the EMS and includes the type information set, the root alarm information, and the processing suggestion information to the foregoing fault processing rule; or when the EMS does not locally store a fault processing rule including the type information set, the root alarm information, and the processing suggestion information, directly storing the foregoing fault processing rule.

In this embodiment of this application, the EMS receives event information of a plurality of anomaly events, identifies, by using a fault processing rule included in the EMS, the event information of the anomaly event caused by the same fault, and generates fault information based on the event information of the anomaly event caused by the fault. The fault information includes a type information set, a second type relational data set, root alarm information, and processing suggestion information. Because the fault information includes the second type relational data set, the OSS may generate a fault processing rule based on the second type relational data set in the fault information, and send the fault processing rule to different EMSs. Because the different EMSs may all receive the fault processing rule for processing a fault, the different EMSs may process the fault. Because the OSS receives a plurality of pieces of fault information sent by different EMSs, the OSS may automatically generate the fault processing rule based on a large amount of fault information, so that the fault processing rule is learnable and updateable, precision of generating the fault processing rule is improved, and efficiency of generating the fault processing rule is improved. The OSS sends the generated fault processing rule to the different EMSs. In this way, efficiency and real-time performance of configuring the fault processing rule in the EMSs can be improved, and the different EMSs can process, according to the fault processing rule, the fault corresponding to the fault processing rule.

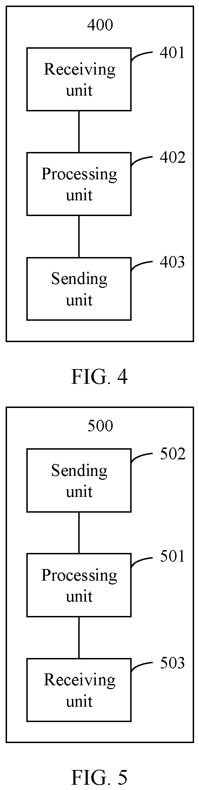

Refer to FIG. 4. An embodiment of this application provides a fault processing apparatus 400. The apparatus 400 may be deployed in the OSS provided in the embodiment shown in FIG. 1, FIG. 2A and FIG. 2B, or FIG. 3, and includes:
a receiving unit 401, configured to receive fault information sent by at least one element management system EMS, where the fault information includes a type information set, a first relationship set, root alarm information of a fault, processing suggestion information for the fault, and time information of a plurality of anomaly events caused by the fault, the type information set includes type information of the plurality of anomaly events, and the first relationship set includes a relationship between the plurality of anomaly events;
a processing unit 402, configured to: aggregate fault information including a same type information set, same root alarm information, and same processing suggestion information into a fault information set, obtain, as a second relationship set, an intersection set of first relationship sets in all pieces of fault information in the fault information set, and determine a time length based on time information in all the pieces of fault information, where the time length is duration of the anomaly event caused by the fault; and
a sending unit 403, configured to send a fault processing rule to the at least one EMS, where the fault processing rule includes the second relationship set, the time length, and a type information set, root alarm information, and processing suggestion information that are in first fault information, the first fault information is any piece of fault information in the fault information set, and the fault processing rule indicates the at least one EMS to process the fault.

Optionally, for a detailed implementation process of obtaining the intersection set and determining the time length by the processing unit 402, refer to related content in step 204 to step 207 in the embodiment shown in FIG. 2A and FIG. 2B and step 304 and step 305 in the embodiment shown in FIG. 3, and details are not described herein again.

Optionally, the relationship between the plurality of anomaly events is represented by at least one piece of type relational data, each piece of type relational data includes type information of two anomaly events of the plurality of anomaly events and a relationship between the type information of the two anomaly events, and the relationship exists between objects corresponding to the two anomaly events.

Optionally, the fault information further includes object information of an object corresponding to each of the plurality of anomaly events, the relationship between the plurality of anomaly events is represented by at least one piece of object relational data, each piece of object relational data includes object information of two objects that have a relationship and the relationship, and objects corresponding to the anomaly events include the two objects.

The processing unit 402 is further configured to:
obtain, based on the at least one piece of object relational data and the object information and type information that are of each anomaly event, a type relational data set corresponding to the fault information, where the type relational data set includes at least one piece of type relational data, each piece of type relational data includes type information of two anomaly events of the plurality of anomaly events and a relationship between the type information of the two anomaly events, and the relationship exists between objects corresponding to the two anomaly events; and
obtain, as the second relationship set, an intersection set of type relational data sets corresponding to all the pieces of fault information in the fault information set.

Optionally, for a detailed implementation process in which the processing unit 402 obtains the type relational data set corresponding to the fault information, refer to related content in step 205 in the embodiment shown in FIG. 2A and FIG. 2B, and details are not described herein again.

Optionally, the time information of the plurality of anomaly events is a time span of generation time of the plurality of anomaly events.

The processing unit 402 is configured to select a maximum time span from time spans in all the pieces of fault information as the time length.

Optionally, the time information of the plurality of anomaly events is generation time of each of the plurality of anomaly events.

The processing unit 402 is configured to: obtain, based on the time information included in each of the pieces of fault information, a time span of generation time of anomaly events corresponding to each piece of fault information; and select a maximum time span from obtained time spans as the time length.

Optionally, types of the plurality of anomaly events include an alarm type, a performance threshold-crossing type, and/or a network element anomaly log type.

Optionally, the processing unit 402 is further configured to:
generate an object topology based on the at least one piece of object relational data, and display the object topology.

In embodiments of this application, because the fault information received by the receiving unit includes the first relationship set and the time information of the plurality of anomaly events, the processing unit may generate the fault processing rule based on the first relationship set and the time information that are in the fault information. Because the receiving unit may receive fault information sent by different EMSs, and the processing unit generates a fault processing rule based on the fault information of the EMSs, data required for generating the fault processing rule is enriched, so that the fault processing rule is learnable and updateable, and efficiency of generating the fault processing rule is improved. The sending unit sends the fault processing rule to the at least one EMS, so that efficiency and real-time performance of configuring the fault processing rule in the EMS are improved.

Refer to FIG. 5. An embodiment of this application provides a fault processing apparatus 500. The apparatus 500 may be deployed in the EMS provided in the embodiment shown in FIG. 1, FIG. 2A and FIG. 2B, or

FIG. 3, and includes:
a processing unit 501, configured to: obtain information that is about a plurality of first anomaly events caused by a first fault and that is reported by at least one network element managed by the apparatus 500, and obtain root alarm information and processing suggestion information that are of the first fault, where the information about the first anomaly event includes type information of the first anomaly event, generation time of the first anomaly event, and object information of an object corresponding to the first anomaly event, where
the processing unit 501 is further configured to obtain a first relationship set based on object information of each first anomaly event, where the first relationship set includes a relationship between the plurality of first anomaly events; and
a sending unit 502, configured to send first fault information to an operations support system OSS, where the first fault information includes a type information set, first time information, the first relationship set, the root alarm information, and the processing suggestion information, the type information set includes type information of each first anomaly event, the first time information includes generation time of the plurality of first anomaly events or a time span of the generation time of the plurality of first anomaly events, the first fault information is used by the OSS to generate a first fault processing rule, and the first fault processing rule indicates at least one element management system EMS that receives the first fault processing rule to process the first fault, where
the first fault processing rule includes a second relationship set, a first time length, and a type information set, root alarm information, and processing suggestion information that are of any piece of first fault information in a fault information set, the first fault information set includes a plurality of pieces of first fault information received by the OSS, each of the plurality of pieces of first fault information includes a same type information set, same root alarm information, and same processing suggestion information, the second relationship set is an intersection set of first relationship sets of the plurality of pieces of first fault information received by the OSS, the first time length is obtained by the OSS based on first time information in the plurality of pieces of first fault information, and the first time length is duration of the first anomaly event caused by the first fault.

Optionally, for a detailed implementation process in which the processing unit 501 obtains the information about the plurality of pieces of first anomaly event caused by the first fault, refer to related content in step 202 in the embodiment shown in FIG. 2A and FIG. 2B, and details are not described herein again.

Optionally, for a detailed implementation process of obtaining the first relationship set by the processing unit 501, refer to related content in step 2024 in the embodiment shown in FIG. 2A and FIG. 2B, and details are not described herein again.

Optionally, the relationship between the plurality of first anomaly events is represented by at least one piece of type relational data, each piece of type relational data includes type information of two first anomaly events of the plurality of first anomaly events and a relationship between the type information of the two first anomaly events, the relationship exists between objects corresponding to the two first anomaly events, and the apparatus 500 includes a network topology.

The processing unit 501 is configured to obtain a first relationship set based on the network topology and/or the object information and the type information that are of each first anomaly event.

Optionally, for a detailed implementation process in which the processing unit 501 obtains the at least one piece of type relational data, refer to related content in step 2024 in the embodiment shown in FIG. 2A and FIG. 2B, and details are not described herein again.

Optionally, the relationship between the plurality of first anomaly events is represented by at least one piece of object relational data, each piece of object relational data includes object information of two objects that have a relationship and the relationship, objects corresponding to the plurality of first anomaly events include the two objects, and the apparatus 500 includes a network topology.

The processing unit 501 is configured to obtain a first relationship set based on the network topology and/or the object information of each first anomaly event.

Optionally, for a detailed implementation process in which the processing unit 501 obtains the at least one piece of object relational data, refer to related content in step 2024 in the embodiment shown in FIG. 2A and FIG. 2B, and details are not described herein again.

Optionally, the first fault information further includes the object information of each first anomaly event.

Optionally, types of the plurality of first anomaly events include an alarm type, a performance threshold-crossing type, and/or a network element anomaly log type.

Optionally, the apparatus 500 further includes a receiving unit 503.

The receiving unit 503 is configured to receive the first fault processing rule.

The processing unit 501 is further configured to: obtain, according to the first fault processing rule, information that is about a plurality of second anomaly events caused by a second fault and that is reported by the at least one network element, where the first fault and the second fault are faults of a same type, and the information about the second anomaly event includes type information of the second anomaly event, generation time of the second anomaly event, and object information of an object corresponding to the second anomaly event; and obtain a third relationship set based on object information of each second anomaly event, where the third relationship set includes a relationship between the plurality of second anomaly events.

The sending unit 502 is further configured to send second fault information to the OSS, where the second fault information includes second time information, the third relationship set, the type information set, the root alarm information, and the processing suggestion information, the second time information includes generation time of the plurality of second anomaly events or a time span of the generation time of the plurality of second anomaly events, the second fault information is used by the OSS to generate a second fault processing rule, the second fault processing rule includes a fourth relationship set, a second time length, the type information set, the root alarm information, and the processing suggestion information, the fourth relationship set is an intersection set of third relationship sets in a plurality of pieces of second fault information received by the OSS, the plurality of pieces of second fault information all include the type information set, the root alarm information, and the processing suggestion information, the second time length is obtained by the OSS based on second time information in the plurality of pieces of second fault information, and the second time length is duration of the second anomaly event caused by the second fault.

The receiving unit 503 is further configured to receive the second fault processing rule.

The processing unit 501 is further configured to update the first fault processing rule to the second fault processing rule.

In embodiments of this application, because the processing unit obtains the first relationship set based on the object information of each first anomaly event, and the first relationship set includes the relationship between the plurality of first anomaly events, the fault information sent by the sending unit to the OSS includes the first relationship set and time information of the plurality of anomaly events. In this way, the OSS may obtain, as the second relationship set, the intersection set of the first relationship sets included in all the pieces of first fault information in the first fault information set, and determine the first time length based on the time information included in all the pieces of first fault information in the first fault information set, to obtain the fault processing rule including content such as the second relationship set and the first time length. Because the OSS may receive first fault information sent by different EMSs, and generate a fault processing rule based on the first fault information of the EMSs, data required for generating the fault processing rule is enriched, so that the generated fault processing rule is learnable and updateable, and efficiency of generating the fault processing rule is improved. The OSS sends the fault processing rule to the EMS, so that efficiency and real-time performance of configuring the fault processing rule in the EMS are improved.

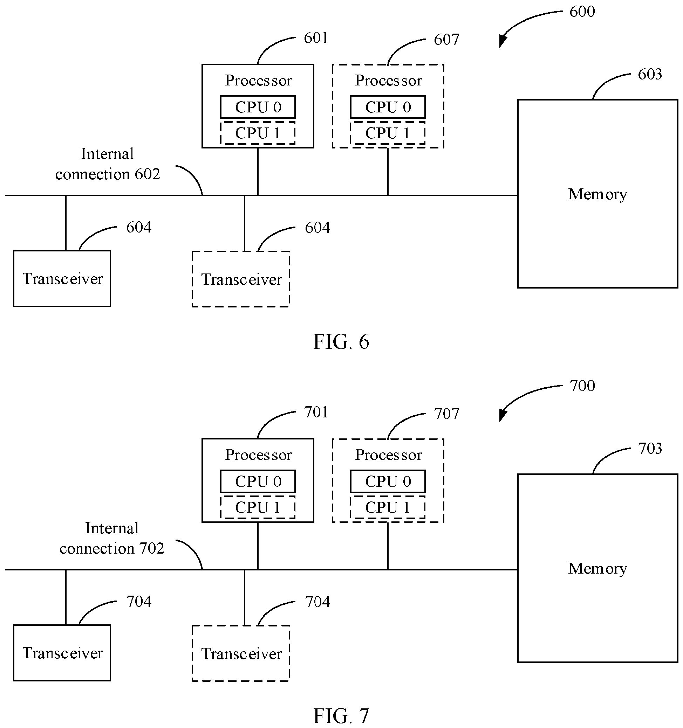

FIG. 6 is a schematic diagram of a fault processing apparatus 600 according to an embodiment of this application. The apparatus 600 may be the OSS in any one of the foregoing embodiments. The apparatus 600 includes at least one processor 601, an internal connection 602, a memory 603, and at least one transceiver 604.

The apparatus 600 is an apparatus of a hardware structure, and may be configured to implement functional modules in the apparatus 700 shown in FIG. 7. For example, a person skilled in the art may figure out that the processing unit 402 in the apparatus 400 shown in FIG. 4 may be implemented by the at least one processor 601 by invoking code in the memory 603, and the receiving unit 401 and the sending unit 403 in the apparatus 400 shown in FIG. 4 may be implemented by the transceiver 604.

Optionally, the apparatus 600 may be further configured to implement a function of the OSS in any one of the foregoing embodiments.

Optionally, the processor 601 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The internal connection 602 may include a path for transmitting information between the foregoing components. Optionally, the internal connection 602 is a board, a bus, or the like.

The transceiver 604 is configured to communicate with another device or a communication network.

The memory 603 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor.

The memory 603 is configured to store application program code for executing the solutions in this application, and the processor 601 controls execution. The processor 601 is configured to execute the application program code stored in the memory 603, and cooperate with the at least one transceiver 604, so that the apparatus 600 implements functions in the method in this patent.

During specific implementation, in an embodiment, the processor 601 may include one or more CPUs, for example, a CPU 0 and a CPU 1 in FIG. 6.

During specific implementation, in an embodiment, the apparatus 600 may include a plurality of processors, for example, the processor 601 and a processor 607 shown in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

FIG. 7 is a schematic diagram of a fault processing apparatus 700 according to an embodiment of this application. The apparatus 700 may be the EMS in any one of the foregoing embodiments. The apparatus 700 includes at least one processor 701, an internal connection 702, a memory 703, and at least one transceiver 704.

The apparatus 700 is an apparatus of a hardware structure, and may be configured to implement functional modules in the apparatus 700 shown in FIG. 7. For example, a person skilled in the art may figure out that the processing unit 501 in the apparatus 500 shown in FIG. 5 may be implemented by the at least one processor 701 by invoking code in the memory 703, and the sending unit 502 and the receiving unit 503 in the apparatus 900 shown in FIG. 5 may be implemented by the transceiver 704.

Optionally, the apparatus 700 may be further configured to implement a function of the EMS in any one of the foregoing embodiments.

Optionally, the processor 701 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The internal connection 702 may include a path for transmitting information between the foregoing components. Optionally, the internal connection 702 is a board, a bus, or the like.

The transceiver 704 is configured to communicate with another device or a communication network.

The memory 703 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor.

The memory 703 is configured to store application program code for executing the solutions in this application, and the processor 701 controls execution. The processor 701 is configured to execute the application program code stored in the memory 703, and cooperate with the at least one transceiver 704, so that the apparatus 700 implements functions in the method in this patent.

During specific implementation, in an embodiment, the processor 701 may include one or more CPUs, for example, a CPU 0 and a CPU 1 in FIG. 7.

During specific implementation, in an embodiment, the apparatus 700 may include a plurality of processors, for example, the processor 701 and a processor 707 shown in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

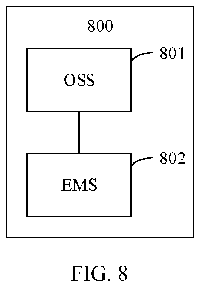

Refer to FIG. 8. An embodiment of this application provides a fault processing system 800. The system 800 includes the apparatus 400 shown in FIG. 4 and the apparatus 500 shown in FIG. 5, or the system 800 includes the apparatus 600 shown in FIG. 6 and the apparatus 700 shown in FIG. 7.

The apparatus 400 shown in FIG. 4 or the apparatus 600 shown in FIG. 6 may be an OSS 801, and the apparatus 500 shown in FIG. 5 or the apparatus 700 shown in FIG. 7 may be an EMS 802.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the concept and principle of this application should fall within the protection scope of this application.

## Claims

1. A fault processing method, wherein the method comprises:
receiving, by an operations support system OSS, fault information sent by at least one element management system EMS, wherein the fault information comprises a type information set, a first relationship set, root alarm information of a fault, processing suggestion information for the fault, and time information of a plurality of anomaly events caused by the fault, the type information set comprises type information of the plurality of anomaly events, and the first relationship set comprises a relationship between the plurality of anomaly events;
aggregating, by the OSS, fault information comprising a same type information set, same root alarm information, and same processing suggestion information into a fault information set, obtaining, as a second relationship set, an intersection set of first relationship sets in all pieces of fault information in the fault information set, and determining a time length based on time information in all the pieces of fault information, wherein the time length is duration of the anomaly event caused by the fault; and
sending, by the OSS, a fault processing rule to the at least one EMS, wherein the fault processing rule comprises the second relationship set, the time length, and a type information set, root alarm information, and processing suggestion information that are in first fault information, the first fault information is any piece of fault information in the fault information set, and the fault processing rule indicates the at least one EMS to process the fault.

2. The method according to claim 1, wherein the relationship between the plurality of anomaly events is represented by at least one piece of type relational data, each piece of type relational data comprises type information of two anomaly events of the plurality of anomaly events and a relationship between the type information of the two anomaly events, and the relationship exists between objects corresponding to the two anomaly events.

3. The method according to claim 1, wherein the fault information further comprises object information of an object corresponding to each of the plurality of anomaly events, the relationship between the plurality of anomaly events is represented by at least one piece of object relational data, each piece of object relational data comprises object information of two objects that have a relationship and the relationship, and objects corresponding to the anomaly events comprise the two objects; the method further comprises:
obtaining, by the OSS based on the at least one piece of object relational data and the object information and type information that are of each anomaly event, a type relational data set corresponding to the fault information, wherein the type relational data set comprises at least one piece of type relational data, each piece of type relational data comprises type information of two anomaly events of the plurality of anomaly events and a relationship between the type information of the two anomaly events, and the relationship exists between objects corresponding to the two anomaly events; and
the obtaining, by the OSS as a second relationship set, an intersection set of first relationship sets in all pieces of fault information in the fault information set comprises:
obtaining, by the OSS as the second relationship set, an intersection set of type relational data sets corresponding to all the pieces of fault information in the fault information set.

4. The method according to any one of claims 1 to 3, wherein the time information of the plurality of anomaly events is a time span of generation time of the plurality of anomaly events; and
the determining, by the OSS, a time length based on time information in all the pieces of fault information comprises:
selecting, by the OSS, a maximum time span from time spans in all the pieces of fault information as the time length.

5. The method according to any one of claims 1 to 3, wherein the time information of the plurality of anomaly events is generation time of each of the plurality of anomaly events; and
the determining, by the OSS, a time length based on time information in all the pieces of fault information comprises:
obtaining, by the OSS based on the time information comprised in each of the pieces of fault information, a time span of generation time of anomaly events corresponding to each piece of fault information; and
selecting, by the OSS, a maximum time span from obtained time spans as the time length.

6. The method according to any one of claims 1 to 5, wherein types of the plurality of anomaly events comprise an alarm type, a performance threshold-crossing type, and/or a network element anomaly log type.

7. The method according to claim 3, wherein the method further comprises:
generating, by the OSS, an object topology based on the at least one piece of object relational data, and displaying the object topology.

8. A fault processing method, wherein the method comprises:
obtaining, by an element management system EMS, information that is about a plurality of first anomaly events caused by a first fault and that is reported by at least one network element managed by the EMS, and obtaining root alarm information and processing suggestion information that are of the first fault, wherein the information about the first anomaly event comprises type information of the first anomaly event, generation time of the first anomaly event, and object information of an object corresponding to the first anomaly event;
obtaining, by the EMS, a first relationship set based on object information of each first anomaly event, wherein the first relationship set comprises a relationship between the plurality of first anomaly events; and
sending, by the EMS, first fault information to an operations support system OSS, wherein the first fault information comprises a type information set, first time information, the first relationship set, the root alarm information, and the processing suggestion information, the type information set comprises type information of each first anomaly event, the first time information comprises generation time of the plurality of first anomaly events or a time span of the generation time of the plurality of first anomaly events, the first fault information is used by the OSS to generate a first fault processing rule, and the first fault processing rule indicates at least one EMS that receives the first fault processing rule to process the first fault, wherein
the first fault processing rule comprises a second relationship set, a first time length, and a type information set, root alarm information, and processing suggestion information that are of any piece of first fault information in a fault information set, the first fault information set comprises a plurality of pieces of first fault information received by the OSS, each of the plurality of pieces of first fault information comprises a same type information set, same root alarm information, and same processing suggestion information, the second relationship set is an intersection set of first relationship sets of the plurality of pieces of first fault information received by the OSS, the first time length is obtained by the OSS based on first time information in the plurality of pieces of first fault information, and the first time length is duration of the first anomaly event caused by the first fault.

9. The method according to claim 8, wherein the relationship between the plurality of first anomaly events is represented by at least one piece of type relational data, each piece of type relational data comprises type information of two first anomaly events of the plurality of first anomaly events and a relationship between the type information of the two first anomaly events, the relationship exists between objects corresponding to the two first anomaly events, and the EMS comprises a network topology; and
the obtaining, by the EMS, a first relationship set based on object information of each first anomaly event comprises:
obtaining, by the EMS, the first relationship set based on the network topology and/or the object information and the type information that are of each first anomaly event.

10. The method according to claim 8, wherein the relationship between the plurality of first anomaly events is represented by at least one piece of object relational data, each piece of object relational data comprises object information of two objects that have a relationship and the relationship, objects corresponding to the plurality of first anomaly events comprise the two objects, and the EMS comprises a network topology; and
the obtaining, by the EMS, a first relationship set based on object information of each first anomaly event comprises:
obtaining, by the EMS, the first relationship set based on the network topology and/or the object information of each first anomaly event.

11. The method according to claim 10, wherein the first fault information further comprises the object information of each first anomaly event.

12. The method according to any one of claims 8 to 11, wherein types of the plurality of first anomaly events comprise an alarm type, a performance threshold-crossing type, and/or a network element anomaly log type.

13. The method according to any one of claims 8 to 12, wherein the method further comprises:
receiving, by the EMS, the first fault processing rule, and obtaining, according to the first fault processing rule, information that is about a plurality of second anomaly events caused by a second fault and that is reported by the at least one network element, wherein the first fault and the second fault are faults of a same type, and the information about the second anomaly event comprises type information of the second anomaly event, generation time of the second anomaly event, and object information of an object corresponding to the second anomaly event;
obtaining, by the EMS, a third relationship set based on object information of each second anomaly event, wherein the third relationship set comprises a relationship between the plurality of second anomaly events;
sending, by the EMS, second fault information to the OSS, wherein the second fault information comprises second time information, the third relationship set, the type information set, the root alarm information, and the processing suggestion information, the second time information comprises generation time of the plurality of second anomaly events or a time span of the generation time of the plurality of second anomaly events, the second fault information is used by the OSS to generate a second fault processing rule, the second fault processing rule comprises a fourth relationship set, a second time length, the type information set, the root alarm information, and the processing suggestion information, the fourth relationship set is an intersection set of third relationship sets in a plurality of pieces of second fault information received by the OSS, the plurality of pieces of second fault information all comprise the type information set, the root alarm information, and the processing suggestion information, the second time length is obtained by the OSS based on second time information in the plurality of pieces of second fault information, and the second time length is duration of the second anomaly event caused by the second fault; and
receiving, by the EMS, the second fault processing rule, and updating the first fault processing rule to the second fault processing rule.

14. A fault processing apparatus, wherein the apparatus comprises:
a receiving unit, configured to receive fault information sent by at least one element management system EMS, wherein the fault information comprises a type information set, a first relationship set, root alarm information of a fault, processing suggestion information for the fault, and time information of a plurality of anomaly events caused by the fault, the type information set comprises type information of the plurality of anomaly events, and the first relationship set comprises a relationship between the plurality of anomaly events;
a processing unit, configured to: aggregate fault information comprising a same type information set, same root alarm information, and same processing suggestion information into a fault information set, obtain, as a second relationship set, an intersection set of first relationship sets in all pieces of fault information in the fault information set, and determine a time length based on time information in all the pieces of fault information, wherein the time length is duration of the anomaly event caused by the fault; and
a sending unit, configured to send a fault processing rule to the at least one EMS, wherein the fault processing rule comprises the second relationship set, the time length, and a type information set, root alarm information, and processing suggestion information that are in first fault information, the first fault information is any piece of fault information in the fault information set, and the fault processing rule indicates the at least one EMS to process the fault.

15. The apparatus according to claim 14, wherein the relationship between the plurality of anomaly events is represented by at least one piece of type relational data, each piece of type relational data comprises type information of two anomaly events of the plurality of anomaly events and a relationship between the type information of the two anomaly events, and the relationship exists between objects corresponding to the two anomaly events.

16. The apparatus according to claim 14, wherein the fault information further comprises object information of an object corresponding to each of the plurality of anomaly events, the relationship between the plurality of anomaly events is represented by at least one piece of object relational data, each piece of object relational data comprises object information of two objects that have a relationship and the relationship, and objects corresponding to the anomaly events comprise the two objects; and the processing unit is further configured to:
obtain, based on the at least one piece of object relational data and the object information and type information that are of each anomaly event, a type relational data set corresponding to the fault information, wherein the type relational data set comprises at least one piece of type relational data, each piece of type relational data comprises type information of two anomaly events of the plurality of anomaly events and a relationship between the type information of the two anomaly events, and the relationship exists between objects corresponding to the two anomaly events; and
obtain, as the second relationship set, an intersection set of type relational data sets corresponding to all the pieces of fault information in the fault information set.

17. The apparatus according to any one of claims 14 to 16, wherein the time information of the plurality of anomaly events is a time span of generation time of the plurality of anomaly events; and
the processing unit is configured to select a maximum time span from time spans in all the pieces of fault information as the time length.

18. The apparatus according to any one of claims 14 to 16, wherein the time information of the plurality of anomaly events is generation time of each of the plurality of anomaly events; and
the processing unit is configured to: obtain, based on the time information comprised in each of the pieces of fault information, a time span of generation time of anomaly events corresponding to each piece of fault information; and select a maximum time span from obtained time spans as the time length.

19. The apparatus according to any one of claims 14 to 18, wherein types of the plurality of anomaly events comprise an alarm type, a performance threshold-crossing type, and/or a network element anomaly log type.

20. The apparatus according to claim 16, wherein the processing unit is further configured to:
generate an object topology based on the at least one piece of object relational data, and display the object topology.

21. A fault processing apparatus, wherein the apparatus comprises:
a processing unit, configured to: obtain information that is about a plurality of first anomaly events caused by a first fault and that is reported by at least one network element managed by the apparatus, and obtain root alarm information and processing suggestion information that are of the first fault, wherein the information about the first anomaly event comprises type information of the first anomaly event, generation time of the first anomaly event, and object information of an object corresponding to the first anomaly event, wherein
the processing unit is further configured to obtain a first relationship set based on object information of each first anomaly event, wherein the first relationship set comprises a relationship between the plurality of first anomaly events; and
a sending unit, configured to send first fault information to an operations support system OSS, wherein the first fault information comprises a type information set, first time information, the first relationship set, the root alarm information, and the processing suggestion information, the type information set comprises type information of each first anomaly event, the first time information comprises generation time of the plurality of first anomaly events or a time span of the generation time of the plurality of first anomaly events, the first fault information is used by the OSS to generate a first fault processing rule, and the first fault processing rule indicates at least one element management system EMS that receives the first fault processing rule to process the first fault, wherein
the first fault processing rule comprises a second relationship set, a first time length, and a type information set, root alarm information, and processing suggestion information that are of any piece of first fault information in a fault information set, the first fault information set comprises a plurality of pieces of first fault information received by the OSS, each of the plurality of pieces of first fault information comprises a same type information set, same root alarm information, and same processing suggestion information, the second relationship set is an intersection set of first relationship sets of the plurality of pieces of first fault information received by the OSS, the first time length is obtained by the OSS based on first time information in the plurality of pieces of first fault information, and the first time length is duration of the first anomaly event caused by the first fault.

22. The apparatus according to claim 21, wherein the relationship between the plurality of first anomaly events is represented by at least one piece of type relational data, each piece of type relational data comprises type information of two first anomaly events of the plurality of first anomaly events and a relationship between the type information of the two first anomaly events, the relationship exists between objects corresponding to the two first anomaly events, and the apparatus comprises a network topology; and
the processing unit is configured to obtain the first relationship set based on the network topology and/or the object information and the type information that are of each first anomaly event.

23. The apparatus according to claim 21, wherein the relationship between the plurality of first anomaly events is represented by at least one piece of object relational data, each piece of object relational data comprises object information of two objects that have a relationship and the relationship, objects corresponding to the plurality of first anomaly events comprise the two objects, and the apparatus comprises a network topology; and
the processing unit is configured to obtain the first relationship set based on the network topology and/or the object information of each first anomaly event.

24. The apparatus according to claim 23, wherein the first fault information further comprises the object information of each first anomaly event.

25. The apparatus according to any one of claims 21 to 24, wherein types of the plurality of first anomaly events comprise an alarm type, a performance threshold-crossing type, and/or a network element anomaly log type.

26. The apparatus according to any one of claims 21 to 25, wherein the apparatus further comprises a receiving unit, wherein
the receiving unit is configured to receive the first fault processing rule;
the processing unit is further configured to: obtain, according to the first fault processing rule, information that is about a plurality of second anomaly events caused by a second fault and that is reported by the at least one network element, wherein the first fault and the second fault are faults of a same type, and the information about the second anomaly event comprises type information of the second anomaly event, generation time of the second anomaly event, and object information of an object corresponding to the second anomaly event; and obtain a third relationship set based on object information of each second anomaly event, wherein the third relationship set comprises a relationship between the plurality of second anomaly events;
the sending unit is further configured to send second fault information to the OSS, wherein the second fault information comprises second time information, the third relationship set, the type information set, the root alarm information, and the processing suggestion information, the second time information comprises generation time of the plurality of second anomaly events or a time span of the generation time of the plurality of second anomaly events, the second fault information is used by the OSS to generate a second fault processing rule, the second fault processing rule comprises a fourth relationship set, a second time length, the type information set, the root alarm information, and the processing suggestion information, the fourth relationship set is an intersection set of third relationship sets in a plurality of pieces of second fault information received by the OSS, the plurality of pieces of second fault information all comprise the type information set, the root alarm information, and the processing suggestion information, the second time length is obtained by the OSS based on second time information in the plurality of pieces of second fault information, and the second time length is duration of the second anomaly event caused by the second fault;
the receiving unit is further configured to receive the second fault processing rule; and
the processing unit is further configured to update the first fault processing rule to the second fault processing rule.

27. A fault processing system, wherein the system comprises the apparatus according to any one of claims 14 to 20 and the apparatus according to any one of claims 21 to 26.
